# FASCICULE DE BREVET EUROPEEN

(11) **EP 3 275 217 B1**
(45) Date de publication et mention de la délivrance du brevet: **02.01.2019**
(21) Numéro de dépôt: 16717985.2
(22) Date de dépôt: 24.03.2016
(51) Int. Cl.: H04W 4/00, H04W 40/24, H04W 40/32, H04W 84/20, H04L 29/08

(54) **PROCEDE DE COMMUNICATION AU SEIN D'UNE GRAPPE DE PROFONDEUR DYNAMIQUE DE DISPOSITIFS ELECTRONIQUES COMMUNICANTS, DISPOSITIF ELECTRONIQUE COMMUNICANT METTANT EN OEUVRE LEDIT PROCEDE ET SYSTEME ASSOCIES**
KOMMUNIKATIONSVERFAHREN IN EINEM DYNAMISCH TIEFEN CLUSTER VON KOMMUNIZIERENDEN ELEKTRONISCHEN VORRICHTUNGEN, KOMMUNIZIERENDE ELEKTRONISCHE VORRICHTUNG MIT IMPLEMENTIERUNG DES BESAGTEN VERFAHRENS UND ZUGEHÖRIGES SYSTEM
COMMUNICATION METHOD WITHIN A DYNAMIC-DEPTH CLUSTER OF COMMUNICATING ELECTRONIC DEVICES, COMMUNICATING ELECTRONIC DEVICE IMPLEMENTING SAID METHOD AND ASSOCIATED SYSTEM

(30) Priorité: 25.03.2015 FR 1552522
(43) Date de publication de la demande: 31.01.2018
(73) Titulaire: Traxens, 13013 Marseille (FR); Institut National de Recherche en Informatique et en Automatique, 78150 Rocquencourt (FR)
(72) Inventeur: DARAGON, Pascal, 13850 Greasque (FR); GUZZO, Natale, 13001 Marseille (FR); NANDAGOBAN, Arulnambi, 13008 Marseille (FR); MITTON, Nathalie, 59650 Villeneuve d'Ascq (FR)
(74) Mandataire: Brun, Philippe Alexandre Georges
(86) Numéro de dépôt international: PCT/FR2016/050670
(87) Numéro de publication internationale: WO 2016/151259

(56) Documents cités:
- Natale Guzzo ET AL: "A Cluster-based and On-demand routing algorithm for Large-Scale Multi-hop Wireless Sensor Networks", , 22 septembre 2014 (2014-09-22), XP055213614, Extrait de l'Internet: URL:https://hal.inria.fr/hal-01057738/docu ment [extrait le 2015-09-16]
- HAIDAR SAFA ET AL: "A cluster-based trust-aware routing protocol for mobile ad hoc networks", WIRELESS NETWORKS ; THE JOURNAL OF MOBILE COMMUNICATION, COMPUTATION AND INFORMATION, KLUWER ACADEMIC PUBLISHERS, DO, vol. 16, no. 4, 20 mai 2009 (2009-05-20), pages 969-984, XP019832836, ISSN: 1572-8196
- TONY DUCROCQ ET AL: "Energy-based clustering for wireless sensor network lifetime optimization", 2013 IEEE WIRELESS COMMUNICATIONS AND NETWORKING CONFERENCE (WCNC), 1 avril 2013 (2013-04-01), pages 968-973, XP055177480, DOI: 10.1109/WCNC.2013.6554695 ISBN: 978-1-46-735937-5

## Description

L'invention concerne un procédé d'adhésion à une grappe de dispositifs électroniques communicants, ledit procédé étant mis en oeuvre par une unité de traitement de l'un desdits dispositifs électroniques communiquant avec des pairs au travers d'un réseau de communication sans fil.

L'invention concerne en outre un système comportant une pluralité de dispositifs électroniques communicants mettant en oeuvre un tel procédé d'adhésion.

A titre d'exemple d'application préférée mais non limitatif, l'invention est décrite au travers d'un exemple d'application relatif à la collecte de grandeurs physiques, telles que, par exemple, une température, un taux d'humidité, une intensité lumineuse, une fréquence de vibration, un choc, etc., en lien avec les environnements interne et/ou externe de containers de biens ou de marchandises ou plus généralement de conteneurs. Selon ledit exemple d'application, lesdits conteneurs sont agglomérés et/ou empilés sur une aire de stockage ou encore itinérants sur une plateforme de transport telle qu'un navire porte-conteneurs, un train de marchandises ou toute autre plateforme de transport adaptée. Chaque conteneur coopère avec l'un desdits dispositifs électroniques communicants. Ces derniers sont chargés de collecter et d'acheminer lesdites grandeurs au travers de messages de service à destination de dispositifs pairs agissant en tant que « têtes de grappe » ou « Heads » selon une terminologie anglo-saxonne. L'une des missions d'un dispositif électronique communicant agissant en tant que tête de grappe, que nous pourrons nommer dans la suite du document Head, consiste à mettre en oeuvre un service déterminé. Un tel service peut, par exemple, consister à agréger des données collectées par les dispositifs communicants et à transmettre lesdites données, après leur agrégation, à une entité distante, au moyen d'une liaison longue portée ou longue distance de type liaison satellite ou liaison radiotéléphonique. L'invention ne saurait toutefois être limitée à ce seul exemple d'application. Plus généralement, un Head est chargé de mettre en oeuvre un service donné en lien avec des données collectées et acheminées par ses pairs, ledit service donné pouvant concerner une supervision ou une gestion d'alarmes, en lieu et place ou en complément d'une communication avec une entité distante.

De nombreuses typologies ou configurations de réseaux d'objets communicants existent.

La publication de Natale Guzzo ET AL: "A Cluster-based and On-demand routing algorithm for Large-Scale Multi-hop Wireless Sensor Networks", publiée le 22 septembre 2014, décrit un réseau de communication sans fil de type ad hoc.

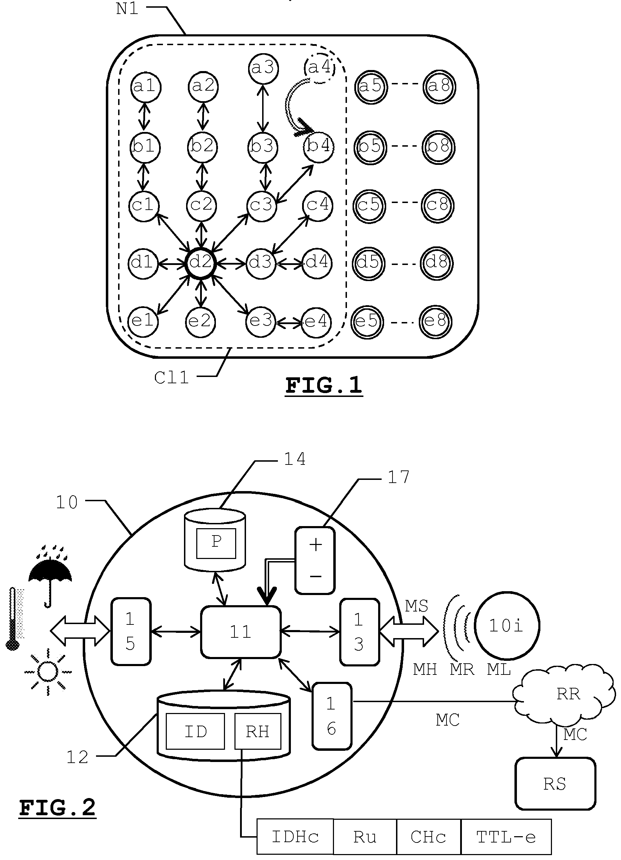

La figure 1 présente ainsi schématiquement un réseau de communication sans fil N1. Quel que soit le réseau opéré, chaque dispositif électronique communicant, que l'on nomme également et généralement « noeud » dudit réseau, met en oeuvre un procédé de communication lui permettant d'échanger des messages de données et/ou de service avec un noeud tiers ou pair. Ainsi, le réseau N1 met en situation quarante dispositifs électroniques communicants respectivement référencés en figure 1 : a1 à a8, b1 à b8, c1 à c8, d1 à d8 et e1 à e8.

Un tel réseau est généralement qualifié de réseau multi-sauts ou « multi-hop network » selon une terminologie anglo-saxonne. Selon cette typologie, un premier noeud que nous nommerons « source », élabore un message de service, représenté en figure 1 par une double flèche, comportant des données en lien avec, à titre d'exemple non limitatif, une grandeur mesurée par un capteur coopérant avec ledit premier noeud, à destination d'un deuxième noeud « destinataire ».

Contrairement à une communication nécessairement directe entre deux noeuds d'un réseau simple-saut (ou « single-hop network » selon une terminologie anglo-saxonne), la communication entre des premier et deuxième noeuds peut être directe ou indirecte entre deux noeuds d'un réseau multi-sauts tel que le réseau N1 selon la figure 1. Ainsi, selon une communication indirecte, un message adressé depuis un noeud source peut être relayé par un ou plusieurs noeuds tiers ou intermédiaires, dont les rôles respectifs consistent à relayer ledit message émanant du noeud source afin que ledit message soit *in fine* acheminé vers et réceptionné par le noeud destinataire. De tels noeuds constituent des grappes ou « clusters » selon une terminologie anglo-saxonne. A titre d'exemple, une grappe Cl1 est représentée par un cerclage en ligne pointillée par la figure 1. Le cheminement suivant lequel un message de service émanant d'un noeud source à destination d'un noeud destinataire, via un ou plusieurs noeuds relayeurs, est nommé généralement « route ». Ainsi, selon la figure 1, un message émis depuis le noeud a4 à destination du noeud d2, est relayé successivement par les noeuds intermédiaires b4 et c3.

La communication au sein d'un réseau de communication multi-sauts est généralement réalisée par voie radio. La communication est généralement de faible portée, c'est-à-dire de l'ordre de quelques mètres à quelques dizaines de mètres, de sorte que, de proche en proche, des messages de service soient transmis entre les différents noeuds. Lorsque des données sont supposées être acheminées à destination d'un serveur ou plus généralement d'une entité distante, un deuxième mode de communication est mis en oeuvre, par exemple, par voie GSM (« Global System for Mobile Communications » selon une terminologie anglo-saxonne) ou GPRS (« General Packet Radio Service » selon une terminologie anglo-saxonne) voire encore, par une liaison satellite.

Comme l'indique à titre d'exemple préféré la figure 2, un noeud consiste généralement et principalement en un dispositif électronique communicant 10 comportant une unité de traitement 11, par exemple sous la forme d'un microcontrôleur, coopérant avec une mémoire de données 12, éventuellement une mémoire de programmes 14, lesdites mémoires étant éventuellement dissociées. L'unité de traitement 11 coopère avec lesdites mémoires 12 et 14 au moyen de bus de communication internes, représentés en figure 2 par des doubles flèches en trait simple. Généralement, un dispositif électronique communicant 10 comporte un ou plusieurs capteurs de mesure 15 d'une grandeur physique en lien avec l'environnement dudit dispositif 10. Un tel capteur peut mesurer la température environnante, un taux d'humidité ou la présence/absence de lumière. Le dispositif 10 comporte en outre des premiers moyens de communication 13 coopérant avec l'unité de traitement 11 et assurant une communication de proximité sans fil avec tout autre dispositif électronique communicant 10i situé à portée de communication. Il peut en outre comporter des deuxièmes moyens de communication 16 de type « longue distance » coopérant également avec l'unité de traitement 11. Ces deuxièmes moyens de communication permettent à un tel dispositif 10 de pouvoir transmettre à une entité distante, par exemple un serveur RS, des données au travers de messages MC distribués par un réseau RR exploitant, par exemple, les technologies GSM, GPRS ou satellite. Pour fonctionner, c'est-à-dire pour que l'unité de traitement 11 mette en oeuvre un procédé découlant de l'interprétation ou de l'exécution, par ladite unité de traitement, d'instructions de programme P enregistrées dans la mémoire de programmes 14, le dispositif 10 comporte une source d'énergie électrique 17, sous la forme d'une ou plusieurs batteries par exemple. La capacité à pouvoir communiquer ou tout simplement à pouvoir fonctionner d'un noeud est directement liée à la capacité énergétique restante et disponible dudit noeud. En effet, les échanges entre noeuds, les traitements ou calculs mis en oeuvre par ces derniers exploitant des données échangées, ainsi que l'acheminement éventuel et distant de données collectées au sein d'un réseau ou d'une grappe de dispositifs électroniques communicants, sont autant d'actions consommatrices en énergie électrique.

Certains constructeurs ou opérateurs ont cherché à optimiser des réseaux ou des procédés de communication mis en oeuvre par des noeuds au sein d'un réseau ou d'une grappe pour préserver globalement la capacité en énergie électrique du réseau ou de la grappe. Globalement, une première approche consiste à répartir le coût énergétique découlant des échanges entre les noeuds sur l'ensemble desdits noeuds du réseau ou de la grappe. Une deuxième approche consiste à répartir la consommation énergétique découlant des traitements mis en oeuvre sur des données collectées, par exemple une émission longue distance, sur la plupart des noeuds, mutualisant ainsi la consommation électrique sur une pluralité de noeuds. Ainsi, que le réseau de communication sans contact soit en configuration simple-saut ou multi-sauts, un noeud peut être arbitrairement désigné ou promu en tant que noeud « tête de réseau » ou du moins en tant que tête de grappe, soit un noeud Head. En liaison avec la figure 1, un dispositif agissant en tant que Head est représenté par un cercle dessiné en trait épais. Il s'agit du noeud d2 pour le réseau N1. Le noeud d2 agit ainsi en tant que Head de la grappe Cl1. De cette manière, l'énergie consommée, notamment pour transmettre à distance des données collectées au sein d'un réseau, est mutualisée sur une pluralité de noeuds. En variante, les Heads peuvent être aléatoirement désignés, ou plus précisément peuvent aléatoirement s'auto-désigner respectivement Heads, à condition que ces derniers disposent de moyens matériels et/ou logiciels suffisants pour mettre en oeuvre un service déterminé.

A titre d'exemple, le procédé « LEACH », tel que décrit notamment par le document titré « An Application-Specific Protocol Architecture for Wireless Microsensor Networks » (W. Heinzelman, A. Chandrakasan, H. Balakrishnan - IEEE TRANSACTIONS ON WIRELESS COMMUNICATIONS, VOL. 1, NO. 4, OCT. 2002), permet dans un réseau simple-saut, de désigner aléatoirement un noeud pour qu'il devienne Head. Les autres noeuds appartenant à la grappe dudit Head, noeuds que nous nommerons respectivement « Membre » ou « Member » selon une terminologie anglo-saxonne, adressent à la tête de grappe, donc au Head, leurs messages de service. En liaison avec la figure 1, chaque noeud Membre est représenté par un cercle dessiné en trait fin. Ainsi, au sein du réseau N1, le Head d2 communique directement avec les noeuds c1 à c4, d1, d3 et d4 ainsi qu'avec les noeuds e1 à e4. Via le Membre c1, le Head d2 communique avec le Membre b1 qui peut relayer à son tour des messages vers ou à destination du Membre a1. Le Head d2 collecte lesdites données émises depuis différents noeuds Membres, les traite, les agrège voire les consolide, et déclenche, par exemple, une émission longue portée à destination d'une entité distante, telle qu'un serveur RS décrit en liaison avec la figure 2. Selon cette technique connue, une fois qu'un noeud a assuré le rôle de Head, il ne peut assurer de nouveau un tel rôle avant l'expiration d'une période déterminée. Un nouveau noeud Membre est alors désigné aléatoirement Head, assurant ainsi une continuité de service. Pour qu'un noeud, que nous nommerons « libre » ou « loose » selon une terminologie anglo-saxonne, représenté par un cercle dessiné en trait double en liaison avec la figure 1, puisse « adhérer » à un Head et ainsi constituer une nouvelle grappe ou rejoindre une grappe existante, un tel noeud libre, situé à portée radio d'un noeud promu ou désigné Head, est agencé pour recevoir un message d'enrôlement MH émanant dudit Head, émis généralement sous la forme d'une émission indifférenciée (également connue sous l'appellation anglo-saxonne « broadcast ») de messages d'enrôlement MH à destination de tout noeud situé à portée radio du Head. La figure 1, permet, au travers du réseau N1, de décrire la résultante d'une émission d'un message MH transmis depuis le noeud d2, désigné pour agir en tant que Head, message MH transmis selon un mode broadcast de courte portée aux noeuds situés à portée de communication. A réception d'un tel message d'enrôlement MH, un noeud libre, par exemple le noeud e2, met à jour sa mémoire de données, ladite mémoire coopérant avec son unité de traitement pour y consigner les coordonnées ou la valeur de l'identifiant du Head, soit l'identifiant du noeud d2 en liaison avec la figure 1. Le dispositif e2, précédemment libre, devient Membre de la grappe Cl1. Il apparaît ainsi représenté par un cercle en trait fin sur la figure 1. Le dispositif d2, agissant en tant que Head, devient le destinataire de tout message de service MS comportant des données collectées par le dispositif e2 nouvellement Membre de la grappe Cl1 à l'instar des autres dispositifs Membres de ladite grappe. L'émission du message MH par le noeud d2 est limitée en portée. Aussi des noeuds, situés hors de portée, ne reçoivent pas le message MH comme message intelligible, voire ne le reçoivent pas du tout. Les noeuds étant hors de portée de d2, tels que les noeuds a5 à a8 ou encore les noeuds b5 à b8 demeurent des noeuds libres, représentés par des cercles dessinés en trait double. La grappe Cl1 ne comporte que le noeud d2, agissant en tant que Head, et les noeuds Membres, c'est-à-dire ayant accepté l'enrôlement du Head d2.

Une transposition de l'enseignement LEACH dans le cadre d'un réseau multi-sauts, comme le réseau N1 décrit en liaison avec la figure 1, pourrait laisser supposer que les noeuds, devenant Membres d'une grappe comportant un noeud agissant en tant que Head, enregistrent, au sein de leurs mémoires de données respectives, la route, c'est-à-dire, la valeur de l'identifiant du noeud agissant en tant que Head et au moins la valeur de l'identifiant du noeud ayant relayé le message d'enrôlement dudit Head, voire en variante, les valeurs respectives des identifiants des noeuds intermédiaires ou relayeurs le séparant dudit Head. Ainsi, à titre d'exemple, le noeud c2 enregistre la valeur de l'identifiant du Head d2, ayant reçu directement un message d'enrôlement MH dudit noeud d2. Le noeud b2 enregistre, quant à lui, outre la valeur de l'identifiant du noeud d2, la valeur de celui du noeud c2 ayant relayé le message d'enrôlement MH de d2 au profit du noeud b2.

Une telle approche permet en théorie, ou du moins selon un mode d'application parfait, de préserver les ressources énergétiques globales d'un réseau de communication comportant une pluralité de noeuds communicants. En pratique ou dans la réalité, et notamment selon des domaines d'application ou d'exploitation d'un tel réseau de communication en lien avec le transport de conteneurs coopérant avec des dispositifs électroniques communicants, une telle solution demeure non pertinente, du moins peu efficace.

En effet, prenons comme exemple d'application préféré et non limitatif, l'exploitation d'un réseau de communication sans fil dont les noeuds consignent, collectent et transmettent des mesures en lien avec une pluralité de conteneurs, tels que des conteneurs de biens ou de marchandises. Imaginons que chaque conteneur soit associé à un dispositif électronique communicant mettant en oeuvre un procédé de communication tel que le LEACH ou un équivalent de type multi-sauts. Selon cette hypothèse, chaque dispositif électronique communicant associé à un conteneur agit en tant que noeud au sein du réseau sans fil, tel que le réseau N1 décrit en liaison avec la figure 1. Imaginons que le mode de communication entre noeuds se fasse par voie radio. Outre le fait qu'un procédé de communication de type LEACH implique une approche simple-saut, imposant ainsi que chaque noeud puisse être en mesure de communiquer directement avec un Head, l'agencement relatif des conteneurs, par exemple sur un navire, sur une aire de stockage ou sur toute plateforme de transport routière ou ferroviaire, crée un contexte applicatif, tel qu'un noeud désigné Head pourrait ne pas être ou ne plus être en mesure d'assurer sa mission, consistant par exemple à transmettre des données agrégées à destination d'une unité distante, du seul fait de son positionnement dans un empilement de conteneurs par exemple. En effet, nombreux sont les obstacles constitués par une plateforme de transport et/ou un espace de stockage, du fait de cloisonnages ou de confinements partiels imposés par la structure d'accueil des conteneurs, ou encore par les interactions engendrées mutuellement par les conteneurs eux-mêmes, dont l'empilement peut entraîner une dégradation, voire une perte de capacité à pouvoir transmettre des données par voie longue distance de la part d'un Head. Le risque de constater une perte de données, des lenteurs d'acheminement desdites données, mais aussi des dépenses énergétiques inutiles et non pertinentes pour « animer » une grappe dont le Head ne serait pas capable d'assurer efficacement sa fonction ou service, est très grand. Ce risque l'est d'autant plus dans le cas où des élections aléatoires de Heads consécutives se traduirait par des « choix » peu fructueux. Pour résoudre de tels inconvénients, les demandeurs ont conçu un réseau de communication sans fil, particulièrement innovant et performant, quel que soit l'agencement relatif des noeuds et quel que soit le cadre applicatif ou d'exploitation dudit réseau, que celui-ci soit de type simple-saut ou multi-sauts. Un tel réseau permet d'optimiser la capacité globale du réseau à assurer un service déterminé à partir de données collectées par les différents noeuds. Il s'appuie principalement sur un procédé d'adhésion à une grappe de dispositifs communicants selon la capacité d'un Head à assumer un tel rôle, pour, à titre d'exemple non limitatif, émettre des données selon un mode de communication longue distance. Chaque noeud mettant en oeuvre un tel procédé peut décider d'agir en tant que Head s'il est en capacité de le faire. Réciproquement, tout noeud libre peut décider d'adhérer ou non à une grappe selon la capacité du Head, avantageusement auto-désigné tête de grappe ou Head. En complément, les demandeurs ont conçu un réseau de communication sans fil, particulièrement innovant et robuste, y compris lorsque des noeuds constituant ledit réseau sont mobiles les uns par rapport aux autres ou lorsque la topologie dudit réseau se révèle particulièrement fluctuante. Selon cette innovation, tout noeud libre peut solliciter, à la demande, une procédure d'affiliation auprès d'un Membre d'une grappe. Une telle procédure d'affiliation peut découler d'une adaptation d'un réseau tel que celui décrit précédemment et illustré en liaison avec la figure 1. Une demande d'affiliation d'un noeud libre est représentée par une flèche en traits doubles. Il s'agit en l'espèce du noeud libre a4, précédemment libre, qui sollicite une affiliation auprès du noeud b4, Membre de la grappe Cl1 dont le Head est le noeud d2. Le noeud a4 devient Affilié à la grappe Cl1, représenté par un cercle discontinue. Ainsi, alors que a4 n'était pas en situation de réceptionner un message d'enrôlement MH émanant du Head d2, il peut rejoindre, à sa demande, la grappe Cl1. Chaque noeud, mettant en oeuvre un telle procédure d'affiliation, peut plus généralement à sa demande et indépendamment de la politique d'enrôlement d'un Head, solliciter une affiliation auprès d'un Membre d'une grappe et ainsi, transmettre des messages de service à destination dudit Head, via notamment le noeud Membre ayant accepté la procédure d'affiliation. On peut ainsi étendre des grappes constituées après une procédure d'enrôlement, voire même transformer un réseau de type simple-saut en un « pseudo réseau multi-sauts » ou plus précisément adapter un réseau simple-saut dont une grappe devient une structure de type multi-sauts, un noeud Membre, ayant accepté une demande d'affiliation, oeuvrant en tant que noeud relayeur du noeud affilié pour la transmission de messages de service.

Quel que soit le type de réseau opéré, les capacités respectives des noeuds mettant en oeuvre un procédé d'adhésion et/ou d'affiliation à une grappe évoluent au fil du temps.

Bien que proposant une avancée significative, une telle solution présente, à l'instar des solutions concurrentes évoquées précédemment, certaines limites ou inconvénients, notamment lorsqu'un tel réseau de communication est exploité dans un contexte applicatif pour lequel la topologie dudit réseau est particulièrement changeante. En effet, quel que soit le réseau de communication choisi, les routes ou topologies, c'est-à-dire la constitution ou la destruction de grappes, dudit réseau ne sont pas mises à jour avec suffisamment de régularité ou selon une fréquence suffisante pour tenir compte de la dynamique dudit réseau. A l'aide des solutions connues, si de telles mises à jour étaient réalisées selon une grande fréquence, le nombre de messages d'enrôlement, de destruction de grappe ou de service, se verrait décuplé, de sorte que l'objectif principal visant à préserver la consommation énergétique des noeuds du réseau ne saurait être tenu.

Par ailleurs, la constitution d'une grappe de grande profondeur, c'est-à-dire selon laquelle un Membre peut être localisé à une distance en nombre de sauts conséquente, peut générer un trafic de messages important inhérent, par exemple, aux relais de messages d'enrôlement MH ou de service MS par les Membres relayeurs. De tels relais itérés à une grande fréquence, qui plus est par de nombreux Membres, peut obérer les capacités énergétiques desdits Membres relayeurs à pouvoir collecter des données, produire et émettre à destination d'un Head ses propres messages de service. Pour un réseau simple-saut, la profondeur est fixée à un saut. Pour un réseau multi-sauts, il n'existe pas de méthode connue permettant de limiter à bon escient, voire de réguler dynamiquement, de manière homogène et maîtrisée, la profondeur d'une grappe.

L'invention permet de répondre à tout ou partie des inconvénients soulevés par les solutions connues. En constituant un réseau de communication sans fil, particulièrement innovant et performant, quel que soit l'agencement relatif des noeuds et quel que soit le cadre applicatif ou d'exploitation dudit réseau, l'invention permet d'optimiser la capacité globale du réseau à assurer un service déterminé à partir de données collectées par les différents noeuds. L'originalité principale du procédé d'adhésion à une grappe de dispositifs électroniques communicants réside dans des modalités d'élection de Heads et/ou dans l'aptitude conférée à tout noeud d'accepter ou moduler sa fonction de Membre relayeur. Chaque noeud mettant en oeuvre un procédé selon l'invention peut décider d'agir en tant que Head en précisant la profondeur de grappe qu'il souhaite. Chaque noeud peut en outre, selon sa capacité à dédier une quotepart de ses ressources au relai de messages d'enrôlement ou de service, par exemple, maintenir ou limiter cette action. Une telle limitation a pour effet de réduire la profondeur de la grappe dont le noeud est Membre, ou du moins, limiter la route descendante à laquelle ledit noeud appartient.

Parmi les nombreux avantages apportés par l'invention, nous pouvons mentionner que celle-ci permet :
- de réguler de manière pertinente les dépenses énergétiques sur les noeuds du réseau, prolongeant ainsi la capacité à rendre un service dudit réseau de manière inégalée par rapport à l'état de la technique ;
- de concevoir un réseau, ou du moins une structures de noeuds, automatiquement adaptable et fonctionnel au gré des changements de positions relatives entre les noeuds ou de l'évolution des conditions d'exploitation desdits noeuds, par exemple lors de la manutention, du stockage ou du transport de conteneurs associés chacun à un dispositif électronique conforme à l'invention ;
- de privilégier la robustesse du service, par exemple l'émission de données par voie longue distance, en conférant à chaque noeud conforme à l'invention l'opportunité de déterminer son rôle au sein du réseau.

A cet effet, l'invention concerne tout d'abord un procédé de communication au sein d'un réseau comprenant une pluralité de dispositifs électroniques communicants, ledit procédé étant mis en oeuvre par une unité de traitement d'un premier dispositif électronique communicant parmi lesdits dispositifs électroniques communicants au sein du réseau, ledit premier dispositif électronique communicant comportant outre ladite unité de traitement, une mémoire de données, des premiers moyens de communication assurant une communication de proximité sans fil avec un dispositif électronique communicant tiers du réseau situé à portée de communication, ladite mémoire de données et lesdits premiers moyens de communication coopérant avec ladite unité de traitement, la mémoire de données comportant la valeur d'un identifiant dédié audit premier dispositif électronique communicant et un enregistrement pour mémoriser la valeur courante d'un identifiant d'un deuxième dispositif électronique communicant agissant en tant que tête d'une grappe. Un tel procédé comporte :
- une étape pour recevoir, via les premiers moyens de communication, un message d'enrôlement élaboré et émis par un dispositif électronique communicant au sein du réseau, ledit message d'enrôlement encodant l'identifiant du deuxième dispositif électronique communicant agissant en tant que tête que grappe ;
- une étape pour décoder ledit message d'enrôlement et en déduire la valeur dudit identifiant du deuxième dispositif électronique communicant agissant en tant que tête de grappe et, le cas échéant, la valeur de l'identifiant d'un troisième dispositif électronique communicant ayant relayé ledit message d'enrôlement ;
- une étape pour mettre à jour l'enregistrement pour que ce dernier mémorise, en tant que valeur courante d'identifiant de dispositif agissant en tant que tête de grappe, ladite valeur de l'identifiant du deuxième dispositif agissant en tant que tête de grappe déduite du message d'enrôlement décodé et, le cas échant, que ledit enregistrement mémorise en outre, en tant que route ascendante vers ledit deuxième dispositif électronique communicant agissant en tant que tête de grappe, la valeur de l'identifiant du troisième dispositif électronique communicant.

Pour maîtriser la profondeur de grappe, l'invention prévoit que :
- ledit message d'enrôlement encode en outre une donnée TTL traduisant l'aptitude d'un dispositif électronique communicant réceptionnant ledit message d'enrôlement à pouvoir relayer ce dernier ;
- l'étape pour décoder ledit message d'enrôlement en déduit en outre la valeur de ladite donnée TTL ;
- l'étape pour mettre à jour l'enregistrement est adaptée pour que ledit enregistrement mémorise la valeur courante de ladite donnée TTL préalablement décrémentée d'une unité.

L'invention prévoit en outre qu'un procédé de communication selon l'invention comporte :
- une étape pour produire un message d'enrôlement relayé, ledit message comprenant :
   o un premier champ encodant la valeur courante d'identifiant de dispositif agissant en tant que tête de grappe inscrite dans l'enregistrement ;
   o un deuxième champ caractérisant une route ascendante vers le deuxième dispositif électronique communicant agissant en tant que tête de grappe, et encodant l'identifiant du premier dispositif électronique communicant ;
   o un troisième champ encodant la valeur courante de la donnée TTL inscrite dans l'enregistrement ;
- une étape pour déclencher l'émission par les premiers moyens de communication dudit message relayé si une étape préalable, consistant à comparer la valeur courante de la donnée TTL inscrite dans l'enregistrement à une valeur plancher déterminée, atteste que ladite valeur courante de TTL est strictement supérieure à ladite donnée plancher.

Afin de vérifier avantageusement que le deuxième dispositif électronique communicant est bien en capacité d'agir en tant que tête de grappe :
- le message d'enrôlement reçu peut comporter une donnée traduisant la capacité du deuxième dispositif électronique communicant agissant en tant que tête de grappe à pouvoir assurer un service donné ;
- l'étape pour décoder ledit message d'enrôlement peut déduire en outre dudit message d'enrôlement ladite donnée traduisant ladite capacité ;
- l'étape pour mettre à jour l'enregistrement peut consister en outre à inscrire dans ledit enregistrement la valeur de ladite donnée traduisant la capacité du dispositif agissant en tant que tête de grappe.

Selon ce mode de réalisation avantageux, le premier dispositif électronique communicant peut décider de rejoindre la grappe du deuxième dispositif électronique communicant selon certaines aptitudes de ce dernier. Pour cela, l'étape pour mettre à jour l'enregistrement et y inscrire la valeur courante de l'identifiant de dispositif électronique communicant agissant en tant que tête de grappe peut n'être avantageusement accomplie que si la donnée traduisant ladite capacité est supérieure ou égale à un seuil minimal d'exigence déterminé.

Pour mettre en oeuvre une réduction de profondeur de grappe, l'invention prévoit qu'un procédé de communication puisse comporter :
- une étape pour recevoir un message de fin de relai élaboré et émis par le troisième dispositif électronique communicant, ledit message de fin de relai comportant l'identifiant dudit troisième dispositif électronique communicant ;
- une étape pour décoder ledit message de fin de relai et pour en déduire la valeur dudit identifiant ;
- une étape pour mettre à jour l'enregistrement comportant la valeur courante d'un identifiant d'un dispositif agissant en tant que tête de grappe, pour effacer ladite valeur courante ou remplacer celle-ci par une valeur prédéterminée traduisant une absence d'identifiant de dispositif agissant en tant que tête de grappe, ladite mise à jour de l'enregistrement n'étant effectuée que si la valeur de l'identifiant déduit du message de fin de relai est comprise dans l'enregistrement en tant que route ascendante vers ledit dispositif agissant en tant que tête de grappe.

Pour qu'un membre d'une grappe puisse de lui-même suspendre son rôle de membre relayeur et ainsi préserver son aptitude à produire et transmettre un message de service à destination du dispositif agissant en tant que tête de grappe, l'étape consistant à comparer la valeur courante de la donnée TTL inscrite dans l'enregistrement à une valeur plancher déterminée, peut consister en outre à produire une capacité à relayer des messages au bénéfice de dispositifs électroniques communicants, lesdits dispositifs électroniques communicants appartenant à une route descendante depuis le premier dispositif électronique communicant, selon un paramètre fonctionnel dudit dispositif, et à comparer ladite capacité produite à un seuil minimum fonctionnel prédéterminé. L'étape pour déclencher l'émission par les premiers moyens de communication dudit message relayé n'est dès lors mise en oeuvre que si ladite capacité produite est strictement supérieure audit seuil minimum fonctionnel prédéterminé.

Pour réguler la profondeur de grappe induite par la réception d'un message d'enrôlement encodant une donnée TTL inférieure à celle d'un précédent message d'enrôlement, l'invention prévoit un premier mode de réalisation selon lequel l'étape pour mettre en jour l'enregistrement à la suite du décodage d'un message d'enrôlement peut consister en outre à déclencher, concomitamment avec la mise à jour de l'enregistrement, des moyens de mesure d'une durée, ledit procédé de communication comportant une étape pour comparer ladite durée à une période d'attente maximale prédéterminée et pour mettre à jour ledit enregistrement et effacer ou remplacer la valeur courante d'identifiant de dispositif électronique communicant agissant en tant que tête de grappe par une valeur prédéterminée traduisant une absence d'identifiant de dispositif électronique communicant agissant en tant que tête de grappe.

Selon un deuxième mode de réalisation, un message d'enrôlement peut comporter un champ encodant une donnée TTL-e caractérisant la profondeur maximale de grappe souhaitée par le deuxième dispositif électronique communicant agissant en tant que tête de grappe et un champ encodant une donnée DST caractérisant la distance séparant le dispositif électronique communicant émetteur dudit message d'enrôlement sur une route descendante depuis le dispositif électronique communicant agissant en tant que tête de grappe (d2). Selon ce deuxième mode de réalisation l'étape pour décoder ledit message d'enrôlement peut en déduire les valeurs desdites données TTL-e et DST. L'étape pour mettre à jour l'enregistrement peut être également adaptée pour que ledit enregistrement mémorise la valeur de la donnée TTL-e et la valeur, préalablement incrémentée d'une unité, de la donnée DST. L'invention prévoit alors que ledit procédé de communication puisse comporter en outre une étape pour comparer lesdites valeurs TTL-e et DST inscrites dans l'enregistrement et pour mettre à jour ledit enregistrement et effacer ou remplacer la valeur courante d'identifiant de dispositif électronique communicant agissant en tant que tête de grappe par une valeur prédéterminée traduisant une absence d'identifiant de dispositif agissant en tant que tête de grappe.

Quel que ce soit le mode de réalisation d'un procédé de communication conforme à l'invention, le premier dispositif électronique communicant peut dynamiquement déterminer une profondeur pertinente de la grappe dont il souhaite agir en tant que tête de grappe. A ce titre, le procédé de communication selon l'invention peut avantageusement comporter :
- une étape pour déterminer la profondeur maximale de la grappe dont le premier dispositif électronique communicant souhaite être tête de grappe selon un paramètre de fonctionnement dudit dispositif ;
- une étape pour encoder un message d'enrôlement et déclencher l'émission dudit message par les premiers moyens de communication, ledit message comportant un premier champ encodant l'identifiant dudit premier dispositif électronique communicant et un deuxième champ encodant la donnée TTL dont la valeur est initialisée à celle de la profondeur maximale de grappe produite.

En variante, un tel procédé de communication peut comporter :
- une étape pour déterminer la profondeur maximale de la grappe dont le premier dispositif électronique communicant souhaite être tête de grappe selon un paramètre de fonctionnement dudit dispositif ;
- une étape pour encoder un message d'enrôlement et déclencher l'émission dudit message par les premiers moyens de communication, ledit message comportant des champs encodant respectivement :
   o l'identifiant dudit dispositif ;
   o la donnée TTL dont la valeur est inscrite dans l'enregistrement ;
   o la donnée TTL-e dont la valeur est initialisée à celle de la profondeur maximale de la grappe déterminée ;
   o la donnée DST dont la valeur est initialisée à une valeur indiquant une distance nulle en nombre de sauts.

Pour ne pas déclencher l'émission de messages d'enrôlement alors que le premier dispositif électronique communicant n'est peut être pas en capacité d'assurer pleinement le rôle de tête de grappe, un procédé de communication selon l'invention peut comporter avantageusement une étape pour évaluer la capacité du premier dispositif électronique communicant à assumer un service déterminé, ladite étape consistant à estimer un paramètre de fonctionnement dudit dispositif et à produire une donnée traduisant la capacité dudit dispositif à pouvoir assurer ledit service déterminé, et pour lequel l'étape pour encoder un message d'enrôlement consiste à prévoir, au sein dudit message d'enrôlement, un champ encodant ladite donnée traduisant ladite capacité préalablement au déclenchement de l'émission dudit message par les premiers moyens de communication.

Un tel procédé peut comporter une étape pour comparer la donnée traduisant ladite capacité à un seuil fonctionnel minimal d'exigence et pour lequel l'étape pour déclencher l'émission du message d'enrôlement n'est mise en oeuvre que si la donnée traduisant ladite capacité est supérieure ou égale audit seuil fonctionnel minimal d'exigence.

Selon un deuxième objet, l'invention concerne un produit programme d'ordinateur comportant des instructions de programme qui, lorsqu'elles sont :
- préalablement enregistrées dans une mémoire de programmes d'un dispositif électronique communicant comportant en outre une unité de traitement, des premiers moyens de communication assurant une communication de proximité sans fil avec tout autre dispositif électronique situé à portée de communication, une mémoire de données enregistrant la valeur d'un identifiant dédié au dispositif et un enregistrement pour comporter la valeur courante d'un identifiant d'un dispositif agissant en tant que tête de grappe, lesdites mémoires et lesdits premiers moyens de communication coopérant avec ladite unité de traitement ;
- exécutées ou interprétées par ladite unité de traitement ;
provoquent la mise en oeuvre d'un procédé de communication conforme à l'invention.

Selon un troisième objet, l'invention concerne un dispositif électronique communicant comportant une unité de traitement, une mémoire de données, une mémoire de programmes, des premiers moyens de communication assurant une communication de proximité sans fil avec tout autre dispositif électronique communicant situé à portée de communication, lesdites mémoires et lesdits premiers moyens de communication coopérant avec ladite unité de traitement, la mémoire de données comportant la valeur d'un identifiant dédié au dispositif électronique communicant et un enregistrement pour comporter la valeur courante d'un identifiant d'un dispositif agissant en tant que tête de grappe. Un tel dispositif électronique communicant comporte dans la mémoire de programmes, les instructions d'un produit programme d'ordinateur tel que décrit précédemment et conforme à l'invention.

Selon un quatrième objet, l'invention concerne un système comportant une pluralité de dispositifs électroniques communicants également conformes à la présente invention.

Selon un mode d'application préféré, un tel système peut avantageusement comporter une pluralité de conteneurs de biens, de marchandises solides, fluides ou liquides, lesdits containers coopérant respectivement avec les dispositifs électroniques communicants, ces derniers comportant chacun un capteur coopérant avec l'unité de traitement pour mesurer et collecter une grandeur en lien avec les environnements interne et/ou externe desdits conteneurs.

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :
- la figure 1, précédemment décrite, illustre un exemple de configuration multi-sauts d'un réseau de communication sans fil ;
- la figure 2, partiellement déjà décrite, présente l'architecture fonctionnelle d'un dispositif électronique communicant selon l'art antérieur et selon l'invention lorsque ce dernier est adapté pour mettre en oeuvre un procédé d'adhésion à une grappe de dispositifs communiquant avec des pairs via un réseau de communication sans fil, ledit procédé étant conforme à l'invention ;
- les figures 3 et 4 décrivent respectivement deux situations selon lesquelles la profondeur d'une grappe peut être régulée dynamiquement selon l'invention ;
- la figure 5 présente une description fonctionnelle d'un tel procédé d'adhésion selon l'invention.

Un dispositif électronique communicant conforme à l'invention s'apparente à un dispositif 10 connu, tel que celui décrit précédemment en liaison avec la figure 2.

A ce titre, un dispositif électronique communicant conforme à l'invention comporte une unité de traitement 11, consistant en un ou plusieurs microcontrôleurs chargés de mettre en oeuvre des traitements sur des données notamment. Lesdites données sont avantageusement, toutes ou parties, enregistrées sur une ou plusieurs mémoires de données 12, généralement électriquement effaçables et inscriptibles. La mémoire de données 12 peut avantageusement comporter une section non effaçable, physiquement isolée ou simplement agencée pour qu'un accès en écriture ou en effacement soit proscrit. Un tel accès peut en variante requérir la satisfaction d'une procédure d'authentification. Une telle section avantageuse de la mémoire de données 12, dont l'accès en modification est restreint, permet d'y consigner notamment la valeur d'un identifiant ID dédié au dispositif électronique communicant. Avantageusement mais de manière non obligatoire, un dispositif 10 peut en outre comporter une ou plusieurs mémoires de programmes 14 pour enregistrer un ou plusieurs programmes P, ou plus généralement un ou plusieurs ensembles d'instructions de programmes, lesdites instructions de programmes étant intelligibles par l'unité de traitement 11. L'exécution ou l'interprétation desdites instructions par ladite unité de traitement provoque la mise en oeuvre d'un procédé de traitement de données ou de fonctionnement du dispositif 10. Ce dernier comporte également des premiers moyens de communication 13 assurant une communication de proximité sans fil avec tout autre dispositif électronique, tel que le dispositif 10i, à condition que ce dernier soit à portée de communication. Par l'intermédiaire desdits premiers moyens de communication 13, le dispositif 10, ou plus précisément son unité de traitement 11, peut émettre et/ou recevoir des messages à destination ou en provenance de dispositifs tiers positionnés à portée de communication. De tels messages peuvent être de toute nature. Parmi différents types de messages, nous pouvons mentionner, de manière non exhaustive, des messages de données MS en lien avec un service particulier S, des messages d'enrôlement MH, des messages de destruction de grappe MR.

Certains dispositifs communicants peuvent tirer bénéfice du champ électromagnétique créé par le réseau, pour y puiser l'énergie électrique suffisante pour assurer leurs fonctionnements, ne serait-ce que durant une brève période temporelle. Toutefois, pour assurer un fonctionnement continu et/ou mettre en oeuvre des traitements nécessitant davantage d'énergie, un dispositif électronique communicant 10 selon l'invention peut avantageusement comporter une source en énergie électrique 17 propre, alimentant notamment l'unité de traitement 11, voire tout autre élément constituant ledit dispositif qui le nécessiterait. Une telle source 17 consiste généralement en une batterie ou une pluralité de batteries. Selon le contexte applicatif privilégié en lien notamment avec le suivi de conteneurs, bien que ce contexte particulier ne saurait limiter le champ d'exploitation de l'invention, un dispositif électronique communicant 10 peut comporter un ou plusieurs capteurs 15 coopérant avec l'unité de traitement 11. Un tel capteur peut mesurer une ou plusieurs grandeurs en lien avec les environnements interne et/ou externe desdits conteneurs et en produire des données. A titre d'exemple, comme illustré par la figure 2, un capteur 15 peut mesurer la température et/ou l'humidité régnant au sein d'un conteneur, l'obscurité ou la perte d'obscurité au sein de l'enceinte attestant une ouverture inopinée du conteneur, voire encore des chocs. Si nécessaire, le ou les capteurs peuvent coopérer avec l'unité de traitement d'un dispositif via des sondes ou des nappes conductrices, notamment dans le cas où un dispositif 10 serait apposé contre la paroi extérieure d'un conteneur alors que l'on souhaite superviser, au moyen dudit dispositif 10, l'environnement intérieur dudit conteneur. Un tel dispositif 10 peut en outre comporter une horloge lui permettant d'horodater les mesures collectées, ladite horloge n'étant pas représentée en figure 2.

Selon le ou les services que l'on souhaite opérer à l'aide de dispositifs électroniques communicants selon l'invention, ces derniers peuvent comporter des moyens additionnels et optionnels. A titre d'exemple préféré et non limitatif, un service peut consister à :
- collecter des données auprès des noeuds d'un réseau de dispositifs électroniques communicants conformes à l'invention, par exemple en lien avec des grandeurs mesurées par lesdits noeuds;
- à agréger lesdites données collectées auprès d'une pluralité de noeuds, puis à élaborer des messages MC encodant des données de service consolidées à destination d'une entité distante, telle qu'un serveur RS.

Pour émettre de tels messages MC, un dispositif 10 comporte avantageusement des deuxièmes moyens de communication longue distance 16 coopérant avec l'unité de traitement 11. Une telle communication peut être réalisée via un réseau RR, par voies GPRS ou satellite, voire par toute autre voie de communication adaptée. Les différents constituants internes du dispositif électronique coopèrent avec l'unité de traitement 11, avantageusement par bus filaires ou par couplage. Le dispositif 10 peut comporter un boîtier abritant lesdits constituants, ledit boîtier comportant avantageusement des moyens de fixation pour apposer le dispositif 10 sur un support dont on souhaite assurer le suivi, en l'occurrence un conteneur suivant l'exemple d'application préféré.

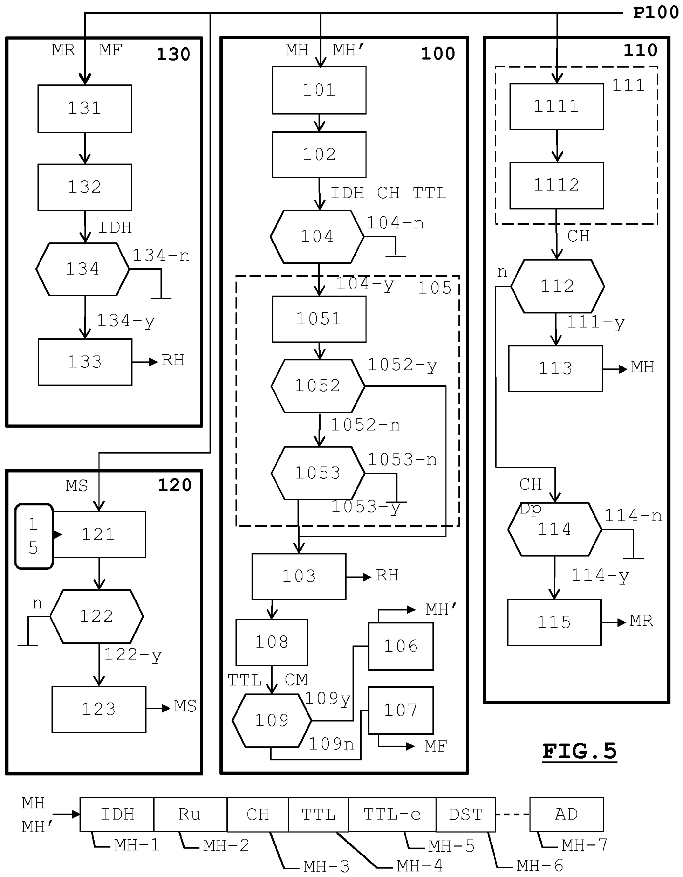

Pour mettre en oeuvre l'invention, il est requis d'agir sur le fonctionnement de l'unité de traitement, plus précisément sur un procédé de communication mis en oeuvre par ladite unité de traitement. Un tel procédé sera décrit ultérieurement en liaison avec la figure 5. Un mode d'adaptation préféré consiste à prévoir un programme, ou plus généralement des instructions de programmes mutuellement agencées, pour mettre en oeuvre ledit procédé lors de l'exécution ou l'interprétation desdites instructions de programme par l'unité de traitement. Avantageusement, ledit programme P est chargé dans la mémoire de programmes 14 lors de l'assemblage dudit dispositif ou, par téléchargement dudit programme au sein de la mémoire 14 après ladite phase d'assemblage du dispositif.

L'invention réside principalement dans la mise en oeuvre d'un réseau avantageusement multi-sauts, pour lequel chaque noeud consiste en un dispositif électronique communicant tel que le dispositif 10 précédemment décrit.

Un noeud d'un tel réseau est généralement adapté ou agencé pour mettre en oeuvre un procédé d'adhésion et/ ou d'affiliation à une grappe de dispositifs. La mémoire de données 12 comporte, outre la valeur de l'identifiant ID dédié au dispositif électronique communicant, un enregistrement RH prévu pour comporter la valeur courante IDHc d'un identifiant IDH d'un dispositif électronique communicant agissant en tant que Head, tel que le noeud d2 selon la figure 1.

Lorsqu'un dispositif choisit d'adhérer à une grappe dont l'un des noeuds agit en tant que Head, cette adhésion est généralement exclusive. En d'autres termes, un noeud ne peut être Membre de grappes distinctes, c'est-à-dire ayant respectivement des noeuds Heads distincts, pour un même service. On parle alors de grappes non recouvrantes. Un noeud adhérant à une grappe choisit le « meilleur » head pour ledit service. Une telle sélection peut se faire par exemple selon une capacité particulière à assurer un service déterminé.

Toutefois, un noeud peut également être rattaché à une pluralité de Heads, si lesdits Heads sont assignés à la mise en oeuvre de services distincts, tels que, par exemple, un premier Head pour l'émission de données longue distance (service Si) et un deuxième Head pour la mise en oeuvre d'un service de gestion d'alarmes (service Sj) sur un site.

A ce titre, à l'instar de la solution LEACH, précédemment présentée, des grappes de dispositifs électroniques communicants, telles que la grappes Cl1 du réseau N1 décrit en liaison avec la figure 1, comportent un dispositif agissant en tant que Head, tel que le noeud d2 décrit en liaison avec la figure 1. Les autres dispositifs agissent en tant que Membres de ladite grappe, tels que, de manière non exhaustive, le noeud c2 décrit en liaison avec la figure 1. Le rôle d'un Membre consiste principalement à collecter des informations, telles que par exemple des mesures de grandeurs environnementales, de les traduire en données, puis d'encoder lesdites données sous la forme d'un message de service MS à destination d'un Head en capacité d'assurer le service déterminé. Ce Head reconnaît lesdits messages de service MS, puis met en oeuvre le service déterminé S. Par exemple, un tel service peut consister à agréger les données transmises au Head depuis plusieurs Membres via des messages MS, puis à mettre en oeuvre une transmission longue distance desdites données agrégées, voire consolidées, sous la forme de messages MC à destination d'une entité distante RS.

Un message de service MS, adressé depuis un Membre d'une grappe à destination d'un Head, est structuré de sorte à comporter :
- une information caractérisant le type du message ;
- la valeur d'un identifiant du noeud source, par ailleurs généralement noeud Membre ;
- la valeur d'un identifiant du noeud destinataire, en l'occurrence un Head, voire un identifiant d'un noeud Membre relayeur dans le cas d'un réseau multi-sauts ;
- des données, par exemple en lien avec des grandeurs mesurées par un capteur du dispositif ;
- éventuellement un code de redondance, voire un cryptogramme ou toute autre information de contrôle permettant à un noeud réceptionnant un tel message de service MS de le décoder, de l'exploiter ou de le relayer.

Un message MS, comme tout autre message circulant au sein du réseau, peut déclencher des messages d'accusé de réception MACK, transmis par le réceptionnaire du message à destination du noeud source. A l'extinction d'une période déterminée ou « timeout » selon une terminologie anglo-saxonne, si aucun message MACK n'est reçu, une nouvelle émission du message MS est déclenchée, et ce pour un nombre limité d'itérations à l'issue duquel le noeud source considère que la « route » ou la communication avec le noeud destinataire n'est pas ou plus disponible. Un tel noeud source peut décider d'abandonner la grappe et de recouvrer un statut de noeud libre, ou encore de chercher à adhérer à une autre grappe.

L'adhésion d'un noeud libre à un noeud agissant en tant que Head est proche de celle mise en oeuvre selon la solution LEACH. Toutefois, les modalités d'élection d'un Head et les modalités d'adhésion d'un noeud libre pour devenir Membre d'une grappe peuvent être très différentes, comme le prévoit par exemple une variante proposée conjointement par les demandeurs. Selon cette variante, seuls des noeuds en réelle capacité d'assurer un service déterminé sont aptes à s'auto-désigner Head. De leur côté, les autres noeuds sont libres d'arbitrer une compétition de Heads et de choisir le Head qui apparaît le meilleur candidat pour mettre en oeuvre le service auquel ils contribuent.

Quel que soit le mode d'élection de Heads, un premier mode de conception de dispositifs communicants peut consister à maintenir continuellement ces derniers en écoute de fréquences de communication radio pour tester la présence de messages émanant de dispositifs pairs. Une telle approche peut entraîner une dépense énergétique importante et obérer l'autonomie de l'ensemble du réseau. Une deuxième approche, connue sous la terminologie anglo-saxonne Wake On Radio (WOR), consiste à plonger les noeuds dans un relatif sommeil durant la grande majorité du temps de leurs fonctionnements respectifs. La communication radio est notamment désactivée car celle-ci est particulièrement consommatrice en énergie électrique. De tels noeuds peuvent toutefois poursuivre la mise en oeuvre de traitements internes peu énergivores. De manière cyclique, de tels noeuds s'éveillent pour écouter d'éventuels messages en provenance de pairs ou pour émettre à leurs tours des messages d'enrôlement, de service, etc.

La figure 5 illustre un procédé P100 de communication mis en oeuvre par un dispositif conforme à l'invention, tel qu'à titre d'exemple un dispositif 10 décrit en liaison avec la figure 2.

Un tel procédé de communication résulte de la mise en oeuvre d'un premier traitement 100 par l'unité de traitement 11 d'un dispositif 10 en réaction à la réception d'un message d'enrôlement MH.

Comme l'indique la figure 5, un message d'enrôlement MH comporte un premier champ MH-1 encodant l'identifiant IDH du dispositif élu pour agir en tant que Head. Un tel message d'enrôlement peut également comporter un champ MH-3 encodant une donnée CH traduisant la capacité dudit Head à pouvoir assurer un service déterminé S. Ledit message peut comporter en outre un champ MH-7 encodant divers attributs ou données additionnelles AD dont, à titre d'exemple non limitatif et optionnel, une donnée caractérisant le service S auquel est associée l'éventuelle donnée CH.

Dans le cadre d'un réseau, structure ou grappe multi-sauts, un message d'enrôlement peut être relayé par un Membre. Lorsqu'un tel message d'enrôlement a d'ores et déjà été propagé par un Membre (nous étudierons le relai d'un tel message ultérieurement en liaison notamment avec l'étape 106) cela signifie qu'un nouveau message d'enrôlement a été élaboré puis émis par un Membre relayeur. Nous noterons MH' un message d'enrôlement relayé pour le différencier du message d'enrôlement originel MH émis par un Head. Un tel message MH' peut comporter un champ MH-2 encodant une donnée Ru caractérisant la route ascendante, c'est-à-dire au moins l'identifiant ID' du Membre relayeur et émetteur dudit message MH'. Ladite route Ru peut comporter en variante les identifiants des différents Membres relayeurs en amont séparant successivement le noeud récepteur du message MH' du noeud Head qui est à l'origine du message d'enrôlement originel MH.

Pour maîtriser la profondeur de la grappe que le Head souhaite constituer, l'invention prévoit qu'un tel message MH ou MH' comporte un champ MH-4 encodant une donnée TTL caractérisant l'aptitude, en nombre de sauts, d'un Membre récepteur dudit message MH ou MH' à pouvoir relayer ce dernier et ainsi propager le message d'enrôlement au sein du réseau. Nous étudierons ultérieurement en liaison avec le traitement 110 du procédé P100, l'élaboration d'un message d'enrôlement MH par un dispositif se désignant Head, tel que le dispositif 10 selon la figure 2, conforme à l'invention. La donnée TTL d'un message MH ou MH' peut consister avantageusement en une valeur entière. Ainsi, lorsque qu'un Head transmet un message MH encodant une valeur TTL égale à un, cela signifie que la profondeur maximale désirée est d'un saut maximum. Une valeur TTL égale à trois signifie que deux Membres distincts sur une route descendante pourraient successivement relayer ledit message d'enrôlement au sein du réseau.

Un traitement 100 selon l'invention comporte ainsi une première étape 101 pour recevoir un message d'enrôlement MH ou MH' élaboré et émis par un dispositif électronique communicant, tel que le noeud d2 ou encore le noeud c3, décrits en liaison avec la figure 1. Le traitement 100 comporte en outre une étape 102 pour décoder ledit message d'enrôlement MH ou MH' et en déduire l'identifiant IDH du Head voire l'identifiant ID' du Membre relayeur (Ru). L'étape 102 consiste par ailleurs à déduire la donnée TTL et à décrémenter celle-ci d'une unité. Si message MH ou MH' ainsi décodé comporte une donnée CH traduisant la capacité du Head à pouvoir assurer un service donné S, l'étape 102 pour décoder ledit message d'enrôlement MH ou MH' en déduit ladite donnée CH, voire toute autre donnée d'intérêt encodée dans ledit message.

Le traitement 100 comporte en outre une étape 103 pour mettre à jour un enregistrement RH, agencé au sein de la mémoire de données 12 d'un dispositif, tel que le dispositif 10 décrit en liaison avec la figure 2. Ledit enregistrement RH est prévu pour consigner la valeur de l'identifiant IDH en tant que valeur courante IDHc d'identifiant d'un dispositif élu pour agir en tant que Head, par exemple le dispositif d2 illustré par la figure 1. Lorsque le message d'enrôlement MH' comporte un champ MH-2, la route ascendante Ru, comportant l'identifiant ID' du dispositif ayant agit en tant que Membre relayeur, est inscrite dans l'enregistrement RH. Lors de la mise à jour 103 dudit enregistrement RH, la valeur de la donnée CH traduisant la capacité du dispositif émetteur à assurer ledit service S, peut également être inscrite dans ledit enregistrement RH. La valeur enregistrée est notée CHc, pour traduire la capacité courante du Head à assurer le service. Dans un réseau, tel que le réseau N1 décrit en liaison avec la figure 1, le dispositif 10 venant de mettre en oeuvre un tel procédé P100, devient Membre de la grappe dont l'émetteur du message MH agit en tant que Head. C'est par exemple le cas des dispositifs agissant comme des noeuds Membres c1 à c3, d1, d3 et e1 à e3 de la grappe Cl1 décrite en liaison avec la figure 1. La mémorisation éventuelle de la capacité dudit Head dans l'enregistrement RH permet, à réception d'un nouveau message MH ou MH' émanant par un autre dispositif émetteur, de comparer éventuellement la capacité du Head courant avec celle d'un nouveau candidat. Nous étudierons ultérieurement le cas de la compétition entre Heads, compétition arbitrée par des noeuds Membres ou libres.

L'invention prévoit en outre qu'un noeud d'ores et déjà Membre d'une grappe et/ou libre puisse adhérer à la grappe dont est Membre le noeud ayant émis un message MH. Ainsi, selon une variante préférée, l'étape 103 du traitement 100 du procédé de communication P100, prévue pour mettre à jour l'enregistrement RH, peut n'être accomplie, que si la donnée CH, traduisant la capacité du noeud souhaitant agir en tant que Head, est supérieure ou égale à un seuil minimal d'exigence déterminé. Ledit traitement 100 comporte ainsi une étape 104 pour comparer la donnée traduisant la capacité déduite en 102 du message RH audit seuil minimal d'exigence. Ainsi, un noeud 10 candidat à l'adhésion à une grappe peut être davantage exigent ou sélectif que les critères minimaux d'élection d'un Head. Ledit seuil minimal d'exigence est avantageusement enregistré dans la mémoire de données 12, voire constitue une constante prédéfinie et fixée dans la mémoire de programmes 14. Il peut être avantageusement identique pour tous les noeuds.

Comme évoqué précédemment, des messages d'enrôlement MH peuvent être régulièrement émis par un ou plusieurs dispositifs communicants situés à portée de communication radio, tels que le dispositif 10i décrit en liaison avec la figure 2. Un dispositif 10, agissant en tant que Membre d'une grappe, peut donc être en situation de recevoir et de décoder un message d'enrôlement MH ou MH' alors que ledit dispositif 10 est d'ores et déjà Membre d'une grappe initiée par un Head.

Deux cas se présentent alors. Selon une première situation, le dispositif 10 a d'ores et déjà exploité un message d'enrôlement MH ou MH' émanant d'un même dispositif agissant en tant que Head. La valeur d'identifiant IDH de ce dernier est donc identique à celle IDHc mémorisée dans l'enregistrement RH, ledit enregistrement étant agencé dans la mémoire de données 12 du dispositif 10. Selon une deuxième situation, la valeur de l'identifiant IDH déduite du message MH ou MH' est distincte de la valeur IDHc. Le dispositif Membre se trouve dans ce cas en situation d'arbitrer une compétition entre deux dispositifs tiers en capacité d'assumer un même service.

Dans le cas, où le réseau selon l'invention prévoit de produire au sein des messages MH ou MH' la capacité d'un Head à tenir efficacement son rôle, le procédé P100 comporte avantageusement une étape 105 subséquente à l'étape pour décoder 102 un message d'enrôlement MH et préalable à l'étape pour mettre à jour 103 l'enregistrement RH comprenant la valeur courante IDHc de l'identifiant du dispositif agissant en tant que tête de grappe. Cette étape 105 peut consister avantageusement à lire en 1051, au sein dudit enregistrement RH, ladite valeur courante IDHc. Puis l'étape 105 peut consister à comparer en 1052 ladite valeur courante IDHc à celle IDH de l'identifiant du dispositif émetteur du message d'enrôlement MH décodé en 102. Dans le cas de la première situation, ci-dessus évoquée, lesdites valeurs IDHc et IDH sont identiques (situation symbolisée par le lien 1052-y en figure 5). L'enregistrement RH peut ainsi être mis à jour à l'étape 103. Cette action permet notamment de mettre à jour la donnée CH au sein de l'enregistrement RH. En effet, selon l'évolution du contexte de fonctionnement du Head, la capacité de ce dernier à assurer le service a peut-être évolué. Elle s'est peut-être dégradée, par exemple en raison d'une réserve énergétique moindre. Elle s'est peut-être améliorée, en raison de la disparition d'un obstacle qui pénalisait la puissance d'émission d'un signal par voie GPRS.

En revanche, dans le cas où les valeurs IDH et IDHc sont distinctes (situation symbolisée par le lien 1052-n décrit par la figure 5), un dispositif en capacité d'agir en tant que Head entre en compétition avec celui qui est, aux yeux du Membre, actuellement le dispositif agissant en tant que tête de grappe. L'invention prévoit que l'étape 105 puisse comporter une étape 1053 pour comparer la donnée CH, traduisant la capacité du dispositif émetteur du message d'enrôlement MH, à la donnée CHc mémorisée dans l'enregistrement RH, traduisant la capacité à assumer ce même service S par le dispositif agissant actuellement en tant que Head. Selon un mode de réalisation avantageux, si la valeur de la donnée CH déduite du nouveau message d'enrôlement est supérieure à la valeur CHc (situation symbolisée par le lien 1053-y), alors l'étape 103 est accomplie pour mettre à jour l'enregistrement RH. La valeur IDHc prend la valeur de l'identifiant de l'émetteur du message d'enrôlement. Le dispositif 10 quitte ainsi la grappe précédente pour adhérer à celle pour laquelle le dispositif émetteur du message MH agit en tant que Head. Les messages de service élaborés par le dispositif 10 seront à présent adressés au nouveau Head. Dans la situation inverse, si la valeur de la donnée CH déduite du nouveau message d'enrôlement est inférieure ou égale à la valeur CHc (situation symbolisée par le lien 1053-n), alors l'étape 103 n'est pas accomplie, car l'émetteur du message d'enrôlement est moins performant que l'actuelle tête de grappe.

Pour limiter la fréquence d'adhésion auprès de différents Heads concurrents et ainsi préserver la capacité énergétique globale du réseau, notamment si les données CH et CHc, traduisant les capacités respectives d'assumer un même service, sont très proches, l'invention prévoit de privilégier une certaine « fidélité », bien que très relative, au profit du dispositif agissant actuellement en tant que Head, quand bien même ce dernier se révèle être moins performant que le dispositif entrant en compétition. Ainsi, si les valeurs d'identifiant IDH et IDHc sont distinctes (situation symbolisée par le lien 1052-n), alors l'étape 103 pour mettre à jour l'enregistrement RH n'est accomplie que si (situation symbolisée par le lien 1053-y en figure 5) un écart significatif, égal à une constante prédéterminée non nulle, existe au profit du dispositif émetteur du message d'enrôlement. L'étape 1053 peut donc être adaptée afin que la mise à jour 103 de l'enregistrement RH ne soit effectuée que si la donnée CH traduisant la capacité du dispositif émetteur du message d'enrôlement MH est supérieure ou égale à celle mémorisée dans l'enregistrement RH augmentée dudit écart.

Pour pouvoir relayer un message d'enrôlement MH au-delà de la portée d'émission du dispositif désigné Head, l'invention prévoit ainsi qu'un procédé d'adhésion P100 puisse comporter une étape 106, subséquente à l'étape 103, pour mettre à jour l'enregistrement RH du dispositif mettant en oeuvre ledit procédé P100. Cette étape additionnelle 106 consiste à encoder et émettre, via les moyens de communication 13, un message d'enrôlement MH' comportant, dans le champ MH-1, l'identifiant IDH du dispositif dont la valeur IDHc est inscrite dans l'enregistrement RH. Avantageusement, si une donnée CHc traduisant la capacité dudit dispositif à pouvoir assurer un service déterminé S est inscrite dans RH, alors un tel message encode en outre, dans le champ MH-3, une donnée traduisant ladite capacité CH. Le message MH', produit en 106, encode en outre (champ MH-2, Ru) l'identifiant ID du dispositif mettant en oeuvre le procédé P100 agissant en tant que Membre de grappe relayeur du message d'enrôlement MH émanant du dispositif agissant en tant que Head. Préalablement à la mise en oeuvre éventuelle d'une telle étape 106, le traitement 100 comporte une étape 109 visant à vérifier que le dispositif mettant en oeuvre le procédé P100 est en capacité de relayer le message MH ou MH' préalablement décodé en 102.

Une telle étape 109 consiste à comparer la valeur courante de la donnée TTL à une valeur plancher déterminée, par exemple une valeur nulle. Ladite valeur courante de TTL correspond au champ MH-4 du message MH ou MH' préalablement décodée et décrémentée avantageusement à l'étape 102. Si la valeur courante de TTL est strictement supérieure à ladite valeur plancher (situation représentée par le lien 109y en figure 5), le message d'enrôlement peut être relayé. L'étape 106 précédemment décrite peut alors être mise en oeuvre. Dans le cas contraire (situation représentée par le lien 109n en figure 5) l'étape 106 n'est pas mise en oeuvre et ledit message d'enrôlement n'est ainsi pas relayé par le dispositif.

Afin de réguler la profondeur de grappe induite par la réception d'un message MH ou MH' encodant une donnée TTL inférieure à celle d'un précédent message d'enrôlement, l'invention prévoit plusieurs modes de réalisation.

Un premier mode de réalisation consiste à, conjointement au traitement mis en oeuvre en 109, comparer une durée, dont le point de départ coïncide avec la mise à jour de l'enregistrement RH à l'étape 103, avec une période d'attente maximale prédéterminée durant laquelle aucun autre message d'enrôlement n'a été reçu. Une telle durée peut être mesurée par exemple en déclenchant un timer ou en initialisant un compteur incrémenté à chaque unité de temps prédéterminée. Si ladite durée est supérieure ou égale à ladite période d'attente maximale prédéterminée, l'invention prévoit que le dispositif n'est plus en situation de transmettre un message de service au Head courant, eu égard à un silence de celui-ci. Le dispositif met alors en oeuvre une étape 107 consistant à recouvrer un statut de noeud libre. Une telle étape consiste notamment à effacer au sein de l'enregistrement RH les données en lien avec l'ancien Head courant.

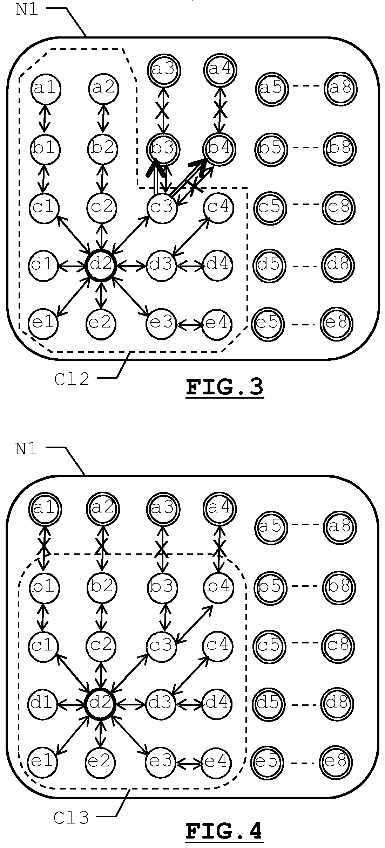

Les figures 1 et 4 permettent d'illustrer ce premier mode de réalisation. En liaison avec la figure 1, un premier message d'enrôlement MH émis depuis le noeud d2 comporte une valeur initiale TTL égale à trois. Ledit message originel MH est ainsi relayé, sous la forme de messages MH', par les noeuds Membres éloignés au plus de deux sauts du Head d2. Les noeuds a1 à a4, éloignés de trois sauts du Head d2, ont pu adhérer la grappe Cl1 sous l'action des Membres relayeurs respectivement b1 à b4. La figure 4 illustre une situation du même réseau N1 postérieure à celle illustrée par la figure 1. Une telle situation découle d'une nouvelle émission d'un message MH par le noeud d2 encodant à présent une valeur TTL égale à deux. Selon le premier mode de réalisation conforme à l'invention, ledit message d'enrôlement MH ne peut être relayé, sous la forme de messages MH', que par des noeuds éloignés au plus d'un saut du Head d2. Les noeuds a1 à a4, précédemment Membres de la grappe Cl1, ne recevant plus de messages d'enrôlement MH' depuis les noeuds b1 à b4 pendant la période maximale d'attente prédéterminée, recouvrent un statut de noeuds libres. Une nouvelle grappe Cl3 dont le noeud d2 agit en tant que Head est créée en lieu et place de la grappe Cl1.

En variante ou en complément, l'invention prévoit un deuxième mode de réalisation consistant à encoder puis émettre un message MF de fin de relai de messages à destination des dispositifs situés à portée de communication radio. Un tel message MF est destiné aux noeuds appartenant à une route descendante. Nous étudierons ultérieurement, en liaison avec les figures 3 et 5, un traitement 130 d'un procédé P100 conforme à l'invention, selon lequel un Membre exploite un tel message de fin de relai MF pour recouvrer un statut de noeud libre. Un tel message MF comporte l'identifiant, que nous noterons IDF, dudit dispositif émetteur et une information caractérisant le message MF en tant que message de fin de relai. Le traitement 100 comporte ainsi une étape 107 pour encoder et déclencher l'émission dudit message MF, avantageusement suivant un mode de type broadcast, par les moyens de communication 13 du dispositif, sous l'impulsion de l'unité de traitement 11 mettant en oeuvre le procédé P100. De tels messages MF sont représentés sur la figure 3 par une flèche en double trait. Selon cet exemple, le Membre c3 émet ainsi à destination de noeuds situés à portée de communication, notamment les noeuds b3 et b4 appartenant respectivement à des routes descendantes de c3. Une nouvelle grappe Cl2 est ainsi créée en lieu et place de la grappe Cl1 illustrée par la figure 1.

Ainsi selon les premier et deuxième modes de réalisation précédemment décrits, l'invention offre une première modalité pour limiter la profondeur d'une grappe en régulant la propagation de tels messages d'enrôlement. Nous pouvons en outre constater que cette régulation est parfaitement dynamique. En effet, comme déjà évoqué en liaison avec les figures 3 et 4, un Head peut émettre un nouveau message d'enrôlement comportant une donnée TTL inférieure, s'il souhaite réduire la profondeur de la grappe dont il est tête de grappe. Au contraire, il peut émettre un nouveau message d'enrôlement avec une donnée TTL accrue afin d'augmenter ladite profondeur. Nous étudierons ultérieurement cette modalité en liaison avec un traitement 110 d'un procédé de communication P100 conforme à l'invention.

L'invention prévoit une deuxième modalité visant à réguler la profondeur d'une grappe. Selon ladite deuxième modalité, les noeuds mettant en oeuvre un procédé P100 conforme à l'invention, n'effectuent pas la comparaison temporelle prévue précédemment à l'étape 109 au regard d'une durée maximale d'attente. Pour s'affranchir d'une gestion répétitive d'émissions de messages d'enrôlement et ainsi préserver la consommation énergétique inhérente à l'exploitation de tels messages MH ou MH' par le réseau, l'invention prévoit qu'un message d'enrôlement MH ou MH' comporte un premier champ supplémentaire MH-5 encodant une donnée TTL-e caractérisant explicitement la profondeur maximale souhaitée par le Head émetteur. Une telle donnée consiste avantageusement en une valeur entière. Ainsi, une valeur TTL-e égale à « un » signifie que le Head ne souhaite pas de propagation (ou de relai) du message d'enrôlement. TTL-e décrit ainsi, en nombre de sauts, la distance maximale pour qu'un noeud puisse prétendre à être devenir Membre de la grappe. En d'autres termes, la valeur TTL-e décrit, augmentée d'une unité, le nombre maximal de relais autorisés sur une même route descendante par un ou plusieurs Membres relayeurs. L'invention prévoit, qu'en complément du champ MH-5, les messages d'enrôlement originels MH et/ou relayés MH' comportent un deuxième champ additionnel MH-6. Un tel champ encode une donnée DST qui caractérise la distance, en nombre de sauts, séparant un émetteur d'un message d'enrôlement MH ou MH' sur une route descendante depuis le Head ayant élaboré le message d'enrôlement originel MH. Ainsi selon cette variante, si un message MH est relayé une fois, l'information DST au sein du message relayé MH' vaut « 1 ». Si ledit message d'enrôlement est relayé trois fois, l'information DST au sein du message d'enrôlement relayé par le Membre le plus éloigné prend la valeur « 3 ». Pour cela, le traitement 100 d'un procédé de communication P100 selon l'invention peut être avantageusement adapté pour que l'étape 102, précédemment décrite, consiste à déduire dudit message MH ou MH' décodé les valeurs des données TTL-e et DST. L'étape 103, également précédemment décrite, permettant de mettre à jour l'enregistrement RH associé au Head courant et agencé dans la mémoire de données 12 du dispositif ayant réceptionné le message d'enrôlement MH ou MH', peut consister avantageusement à inscrire en outre, au sein dudit enregistrement RH, la donnée DST préalablement incrémentée d'une unité ainsi que la valeur de la donnée TTL-e. Ainsi, chaque dispositif du réseau connaît, grâce à la teneur de l'enregistrement RH, la distance en nombre de sauts qui le sépare d'un Head sur une route Ru ascendante donnée.

Pour réguler la profondeur de la grappe initiée par un Head, l'étape 109 d'un traitement 100 d'un procédé de communication P100 selon l'invention consiste, à l'instar de la modalité précédente, à comparer la valeur courante de la donnée TTL à une valeur plancher déterminée, par exemple une valeur nulle. Ladite valeur courante de TTL correspond au champ MH-4 du message MH ou MH' préalablement décodée et décrémentée avantageusement à l'étape 102. Si la valeur courante de TTL est strictement supérieure à ladite valeur plancher (situation représentée par le lien 109y en figure 5), le message d'enrôlement peut être relayé. L'étape 106 précédemment décrite peut être mise en oeuvre. Dans le cas contraire (situation représentée par le lien 109n en figure 5) l'étape 106 n'est pas mise en oeuvre et ledit message d'enrôlement n'est pas relayé par le dispositif. L'étape 109 consiste à présent à comparer les valeurs respectives des données TTL-e et DST inscrites dans l'enregistrement RH. Si la valeur de la donnée DST est supérieure à celle de la donnée TTL-e, cela signifie que le dispositif n'est plus en situation de transmettre un message de service au Head courant, car ce dernier est trop éloigné en nombre de sauts du Head au regard d'une profondeur maximale souhaitée par ce dernier. Ce cas correspond à une réduction de la profondeur d'une grappe initiée par le Head courant. Le traitement 100 consiste en outre à déclencher l'étape 107, précédemment décrite, consistant à recouvrer un statut de noeud libre. Les données en lien avec l'ancien Head courant au sein de l'enregistrement RH sont donc effacées. Ladite étape 107 peut consister en outre à encoder puis déclencher l'émission d'un message MF, avantageusement suivant un mode de type broadcast, par les moyens de communication 13 du dispositif, sous l'impulsion de l'unité de traitement 11 mettant en oeuvre le procédé P100. Une telle situation est également décrite par la figure 3 selon laquelle un noeud c3 émet un message de fin de relai MF.

Décrivons à présent les actions entreprises par un dispositif électronique communicant conforme à l'invention qui s'auto-désigne Head d'une grappe. Pour cela, un procédé de communication P100 selon ladite invention comporte un traitement 110. Ce dernier peut avantageusement, mais non obligatoirement, comporter une première étape d'évaluation 111 de la capacité du dispositif 10 à assurer un service déterminé S pour éventuellement, s'auto-désigner ou s'auto-élire tête d'une grappe ou Head. Une telle étape 111 peut consister dans un premier temps à estimer, en 1111, un ou plusieurs paramètres de fonctionnement du dispositif 10 pour tester la capacité de celui-ci à assurer correctement ledit service. A titre d'exemple préféré, supposons que ledit service consiste à agréger des données collectées et déduites de messages de service MS, de consolider lesdites données, d'encoder un message MC et d'émettre ce dernier par des moyens de communication longue distance 16 à destination d'un serveur distant dont la mission consiste à tracer des conteneurs coopérant avec des dispositifs communicants. Pour pourvoir assurer ce service, le dispositif doit évidemment comporter des moyens de communication adaptés, tels que les moyens 16. Par ailleurs, une telle communication, par exemple de type GPRS, mobilise une quantité d'énergie électrique importante, ne serait-ce que pour initier la liaison. Il est donc impératif qu'un dispositif, agissant en tant que Head, dispose d'une réserve énergétique suffisante pour supporter une telle sollicitation. Par ailleurs, il est également préférable que la puissance d'émission d'un signal par voie GPRS soit des plus optimales. En effet, une puissance d'émission faible engendrerait des lenteurs, donc une durée d'émission accrue et particulièrement consommatrice en énergie électrique, voire de nouvelles tentatives d'émissions successives en cas d'échec ou encore des pertes pures et simples de messages MC.

L'étape 1111 peut également consister en une étape d'autotest ou d'auto-évaluation du dispositif, par exemple, du niveau de batterie 17, voire de la puissance d'émission d'un signal par voie GPRS. Ladite étape 1111 peut permettre aussi d'évaluer d'autres paramètres fonctionnels du dispositif, comme à titre d'exemple, le nombre d'émissions de messages MC. Pour cela, un compteur d'envois de messages MC peut être mis en oeuvre par l'unité de traitement 11, compteur dont la valeur peut être enregistrée dans la mémoire de données 12. L'estimation de la sollicitation du dispositif 10 en tant que Head peut ainsi consister en la lecture dudit compteur en mémoire de données 12.

Le traitement 110 comporte avantageusement une étape 1112 pour produire une donnée CH traduisant la capacité dudit dispositif 10 à pouvoir assurer le service déterminé S. A titre d'exemple, la production d'une telle donnée CH par l'unité de traitement, peut consister à l'évaluation d'une équation ou d'une fonction prédéfinie produisant une métrique intégrant lesdits paramètres estimés, éventuellement respectivement pondérés pour privilégier un paramètre par rapport à un autre. Par exemple, une estimation de puissance d'émission GPRS peut consister à calculer un ratio correspondant à la puissance d'émission estimée d'un signal de test, divisée par une constante décrivant une puissance maximale typique, c'est-à-dire, lors de conditions optimales d'émission.

En lien avec le niveau de batterie ou plus généralement de la source énergétique 17 du dispositif, l'étape 1112 peut contraindre l'unité de traitement à calculer un ratio correspondant à l'énergie disponible estimée au regard de l'énergie à pleine charge.

Plus généralement, une telle métrique CH caractérisant la capacité d'un dispositif à agir en tant que tête de grappe peut se calculer, de manière non limitative, par l'évaluation d'une équation telle que CH = K₁.f₁(p1) + K₂.f₂(p2) + ... Kᵢ.fᵢ(pᵢ) pour laquelle, i étant un entier supérieur ou égal à 1, K1, K2,..., Ki constituent des poids, éventuellement distincts, f₁(), f₂(), ..., fᵢ() sont des fonctions de calcul éventuellement distinctes, par exemple l'élaboration d'un ratio, et p₁, p₂, ..., pᵢ sont des paramètres fonctionnels du dispositif, dont, à titre d'exemples non limitatifs, le niveau d'énergie électrique de la source 17, une puissance d'émission longue distance, la taille d'une mémoire disponible pour enregistrer des données, une puissance de calcul, etc.

La donnée CH peut ainsi s'apparenter à une valeur réelle. Elle peut également être composite, c'est-à-dire, être une donnée structurée, comportant chaque paramètre fonctionnel du dispositif ou comportant, en lieu et place, d'un desdits paramètres fonctionnels, une fonction déterminée d'un desdits paramètres fonctionnels.

Une donnée CH étant éventuellement produite en 1112, un procédé selon l'invention comporte une étape 112 pour comparer ladite donnée CH à un seuil fonctionnel minimal d'exigence. Dans le cas où la donnée CH est structurée, il en est de même pour ledit seuil. La comparaison 112 peut alors consister en autant de comparaisons indépendantes d'un paramètre fonctionnel à des seuils fonctionnels minimaux d'exigence particuliers, auxquelles serait appliquée une logique combinatoire (de type ET, OU, etc.).

Si l'étape 112 démontre que la donnée CH est supérieure ou égale audit seuil fonctionnel minimal d'exigence (lien référencé 112-y en figure 3), le procédé P100 comporte avantageusement une étape 113 pour encoder et émettre un message d'enrôlement MH. Préalablement à une telle émission, l'invention consiste à prévoir ladite étape 112 pour déterminer la profondeur maximale de la grappe dont le dispositif souhaite être le Head. Cette détermination peut découler, à l'instar d'une capacité CH produite en 1112, d'une relation tenant compte d'un ou de plusieurs paramètres fonctionnels du dispositif, telle que Dp = Q₁.g₁(p1) + Q₂.g₂(p2) + ... Qᵢ.gᵢ(pᵢ) pour laquelle, i étant un entier supérieur ou égal à 1, Q1, Q2,..., Qi constituent des poids, éventuellement distincts, g₁(), g₂(), ..., gᵢ() sont des fonctions de calcul éventuellement distinctes, par exemple l'élaboration d'un ratio, et p₁, p₂, ..., pᵢ sont des paramètres fonctionnels du dispositif. En variante, la valeur de ladite profondeur Dp peut également être prédéterminée et mémorisée dans les moyens 12 ou résulter d'un paramétrage. A l'instar d'un noeud d'un réseau de type LEACH, un dispositif, mettant en oeuvre un procédé de communication P100 selon l'invention, peut toutefois déroger aux étapes 111 et 112 et s'auto-désigner, voire être automatiquement ou arbitrairement désigné, Head, indépendamment de ses capacités à efficacement assurer ce rôle. Néanmoins, contrairement à l'art antérieur, un Head selon l'invention maîtrise la profondeur de la grappe qu'il initie par l'intermédiaire de la donnée Dp.

Comme étudié précédemment en liaison avec l'exemple non limitatif illustré en figure 5 et le traitement 100, un message d'enrôlement MH, encodé en 113, comporte un premier champ MH-1 encodant l'identifiant du dispositif, que nous référençons IDH, en tant qu'identifiant d'un dispositif élu pour agir en tant que Head. Il peut également comporter un champ MH-3 encodant la donnée CH traduisant la capacité dudit dispositif à pouvoir assurer le service déterminé S si celle-ci a été produite en 1112. Le message MH peut comporter en outre un champ MH-7 encodant divers attributs ou données additionnelles AD dont, à titre d'exemple non limitatif et optionnel, une donnée caractérisant le service S auquel est associée l'éventuelle donnée CH.

Pour maîtriser la profondeur Dp de la grappe que le Head souhaite constituer, un tel message MH comporte, en un champ MH-4, une donnée TTL caractérisant l'aptitude, en nombre de sauts, d'un Membre récepteur dudit message d'enrôlement à pouvoir relayer ce dernier et ainsi propager au sein du réseau ledit message d'enrôlement. Comme évoqué précédemment en liaison avec le traitement 100 décrit à titre d'exemple non limitatif par la figure 5, une telle donnée TTL peut consister avantageusement en une valeur entière. Ainsi, lorsque qu'un Head transmet un message MH encodant une valeur TTL égale à un, cela signifie que la profondeur maximale désirée est d'un saut maximum. Une valeur TTL égale à trois signifie que deux Membres distincts sur une route descendante pourraient successivement relayer ledit message d'enrôlement.

Selon la première modalité décrite en liaison avec ledit traitement 100, la valeur TTL encodée en 113 dans le champ MH-4 est initialisée à la valeur Dp. Le message MH originel produit en 113, est diffusé, par exemple « broadcasté », par les premiers moyens de communication 13 dudit dispositif sous l'action de l'unité de traitement 11 mettant en oeuvre ledit procédé P100. Tout dispositif communicant situé à portée de communication, tel que le dispositif 10i décrit en figure 2, peut réceptionner ledit message MH.

Pour respecter la période d'attente maximale prédéterminée testée en 109, le traitement 110 est mis en oeuvre itérativement selon une périodicité inférieure à ladite période d'attente maximale prédéterminée. Lorsque le traitement 100 comporte avantageusement une étape 111 pour estimer la capacité à assurer un service donné S, ladite capacité CH peut être révisée, encodée puis émise en 113. Elle peut être augmentée pour traduire une meilleure capacité ou diminuée dans le cas contraire. Si, la comparaison 112 atteste que les paramètres fonctionnels d'un dispositif ne satisfont pas aux minima fonctionnels en 112, il n'y a pas d'émission de message d'enrôlement MH. Ainsi, tout dispositif électronique qui n'est pas en capacité d'assurer un service donné, quand bien même il dispose théoriquement des moyens matériels ou logiciels pour y parvenir, peut ne pas se désigner Head ou constituer une grappe de dispositifs communicants de faible amplitude ou profondeur. Il en est en effet de même pour la profondeur de grappe Dp qui peut être révisée, à la hausse ou à la baisse comme évoqué précédemment. La donnée TTL encodée dans le champ MH-4 de chaque message MH originel transmis en 113 peut être ainsi être initialisée à des valeurs distinctes d'une itération du traitement 110 à une autre. Comme évoqué précédemment en liaison avec le traitement 100, l'information TTL des différents messages MH intervient comme régulateur de la profondeur maximale de la grappe, et par voie de conséquence des dépenses énergétiques du réseau induites par le traitement des messages échangés au sein dudit réseau.

Le traitement 110 peut comporter une étape 114, éventuellement jointe à l'étape 112, pour comparer la donnée CH produite en 1112 à un minimum fonctionnel, attestant une capacité insuffisante à pouvoir assurer le service. Un tel seuil minimum peut être prédéterminé et enregistré, à l'instar du seuil exploité à l'étape 112, dans la mémoire de données 12. Cette étape 114 et a fortiori une étape 115 qui en découle éventuellement, peuvent être avantageusement subséquentes à l'émission 113 d'un message d'enrôlement MH. Si la comparaison 114 confirme (lien 114-y en figure 5) que le dispositif n'est plus capable d'assurer le service S, le traitement 110 d'un procédé de communication P100 selon l'invention peut comporter avantageusement une étape 115 pour encoder et émettre un message de destruction de grappe MR, avantageusement broadcasté. Cette émission d'un message MR peut être réalisée par les moyens de communication 13 du dispositif, sous l'impulsion de l'unité de traitement 11 mettant en oeuvre le procédé de communication P100. A l'instar d'un message d'enrôlement MH, un message de destruction de grappe MR, émis depuis un dispositif agissant précédemment en tant que Head mais ne se trouvant plus en situation d'assurer efficacement un service déterminé S, comporte l'identifiant dudit dispositif, noté IDR. Il peut également comporter la donnée CH caractérisant la capacité, ou dans ce cas, une incapacité à assurer le service. En variante, un tel message MR peut simplement associer à l'identifiant du dispositif émetteur, une information caractérisant le message MR en tant que message de destruction de grappe. Un tel message MR peut également consister en un message d'enrôlement MH comportant une donnée TTL égale à zéro. Cette étape 115 peut n'être avantageusement déclenchée que si le dispositif émetteur agissait préalablement en tant que Head, afin de ne pas émettre inutilement des messages de destruction d'une grappe non pertinents et de prévenir également toute exploitation indue de tels messages par des noeuds réceptionnaires. Pour qu'un dispositif conforme à l'invention puisse détecter qu'il était préalablement en situation d'assurer un rôle de Head, l'unité de traitement 11 dudit dispositif peut par exemple inscrire dans la mémoire de données 12 la valeur Dp traduite dans le champ MH-4 (donnée TTL) du dernier message MH transmis en 113. Ladite inscription est effectuée conjointement au déclenchement de l'émission dudit message MH. Une valeur non nulle de ladite valeur Dp inscrite en mémoire de données 12 indique que le dispositif agissait en tant que Head lors de l'itération précédente du traitement 110. Une telle valeur est avantageusement réinitialisée à une valeur nulle, ou en variante à toute autre valeur prédéterminée caractérisant une profondeur de grappe nulle, lors de l'encodage et de l'émission d'un message de destruction de grappe en 115. Ladite unité de traitement 11 peut en variante ou en complément exploiter un compteur d'émission de messages MC, tel qu'évoqué précédemment, enregistré en mémoire de données 12. Lors de la comparaison 114, une valeur dudit compteur, supérieure à sa valeur initiale, enseigne que ledit dispositif agissait en tant que Head. A l'issue de l'émission d'un message MR, ledit compteur peut être remis à la valeur initiale. Toutefois, toute autre action pourrait être mise en oeuvre par l'unité de traitement 11 pour valider la mise en oeuvre de l'étape 115, en lieu et place de l'exploitation du compteur d'émission de messages MC. A titre d'exemple non limitatif, une telle action peut découler de la réception, par le dispositif agissant en tant que Head, d'un message d'enrôlement émanant d'un dispositif tiers, agissant lui aussi en tant que Head et dont la donnée traduisant sa capacité à assurer un même service est supérieure à la sienne. Dans ce cas, l'unité de traitement 11 du dispositif mettant en oeuvre le procédé P100 déclenche l'étape 115, s'effaçant ainsi devant meilleur que lui. Selon cette dernière variante, l'invention prévoit de limiter le nombre d'émissions de messages de destruction de grappe MR, conséquence directe d'une évolution particulièrement dynamique et oscillante de capacités des noeuds à agir en tant que Heads, entraînant une compétition très soutenue entre de nombreux Heads. Une telle situation peut par exemple être rencontrée lors d'un transport ferroviaire d'une multitude de conteneurs, coopérant chacun avec un dispositif communicant conforme à l'invention et pour lequel, le service déterminé consiste à émettre régulièrement par voie GPRS des informations en lien avec le contenu des conteneurs. L'aptitude des Heads à émettre par voie longue distance peut être très changeante. Pour répondre à cette difficulté, l'invention prévoit d'intégrer dans la mise en oeuvre de l'étape 114, un « facteur de compétition », par exemple un réel positif, supérieur à « 1 » dont la valeur peut être enregistrée dans les mémoires 12 des différents noeuds. Ainsi, un Head, réceptionnant un message d'enrôlement MH émanant d'un noeud tiers, ne compare pas, à l'étape 114, strictement les données CH traduisant les capacités respectives à assurer un même service. L'étape 114 consiste à comparer la donnée CH déduite du message d'enrôlement MH multipliée par le facteur de compétition. Ainsi, si ledit facteur est supérieur à « 1 », par exemple « 1,25 », alors le noeud, mettant en oeuvre l'étape 114, est pénalisé par l'exploitation dudit facteur au regard du concurrent. Ainsi, même si la donnée CH dudit noeud traduit une meilleure capacité que celle du Head ayant émis le message MH, l'application du facteur de compétition, améliore virtuellement celle du compétiteur. Dans ce cas, le noeud met en oeuvre l'étape 115, transmet un message de destruction de grappe MR et rejoint la grappe du concurrent en tant que Membre. Une telle solution permet de limiter des créations et/ou destructions de grappes trop nombreuses obérant la capacité énergétique du réseau. Elle permet en outre de limiter le nombre de noeuds aptes à agir concomitamment en tant que Heads. En effet, selon le service S envisagé, par exemple comportant une émission longue distance, un trop grand nombre de noeuds agissant de concert en tant que Heads, puiserait, par exemple, trop dans les réserves énergétiques du réseau. Le facteur de compétition peut donc être vu comme un paramètre de régulation du nombre de Heads et de la dynamique de l'adaptabilité du réseau à son environnement.

Pour mettre en oeuvre la deuxième modalité de régulation évoquée précédemment en liaison avec le traitement 100 décrit en liaison avec la figure 5, le message encodé en 113 comporte un premier champ supplémentaire MH-5 encodant une donnée TTL-e caractérisant explicitement la profondeur maximale de grappe souhaitée par le Head émetteur du message d'enrôlement. Une telle donnée TTL-e consiste avantageusement en une valeur entière. Ainsi, une valeur TTL-e égale à « un » signifie que le Head ne souhaite pas de propagation (ou de relai) du message d'enrôlement. Une valeur strictement supérieure à « un » décrit, en nombre de sauts, augmenté d'une unité, le nombre de relais autorisés sur une même route descendante par un ou plusieurs Membres relayeurs. L'invention prévoit, qu'en complément du champ MH-5, un message d'enrôlement originel MH comporte un deuxième champ additionnel MH-6. Un tel champ encode une donnée DST qui caractérise la distance, en nombre de sauts, séparant un émetteur d'un message d'enrôlement MH ou MH', sur une route descendante depuis le Head ayant élaboré le message d'enrôlement originel MH, dudit Head. Ainsi, selon cette variante, si un message MH est relayé une fois, l'information DST au sein du message relayé MH' vaut « un ». Si ledit message d'enrôlement est relayé trois fois, l'information DST au sein du message d'enrôlement relayé par le Membre le plus éloigné prend une valeur égale à « trois ». Pour mettre en oeuvre cette deuxième modalité, l'étape 113 consiste à initialiser la valeur TTL-e, encodée dans le champ MH-5, à la valeur Dp produite en 112. La donnée TTL est initialisée avec la valeur inscrite dans la mémoire de données 12. Elle correspond à la profondeur maximale de la grappe produite en amont de l'émission d'un message d'enrôlement déclenchée lors de la précédente itération du traitement 110. La valeur TTL est donc encodée dans le champ MH-4 d'un message MH prêt à être émis par le dispositif. La donnée DST encodée dans le champ MH-6 dudit message MH est, quant à elle, initialisée à une valeur nulle ou toute autre valeur prédéterminée indiquant une distance nulle. En effet, le Head est éloigné de lui-même selon une distance nulle en nombre de sauts. A l'issue du déclenchement de l'émission du message MH, la valeur courante de Dp est mise à jour dans la mémoire de données 12. La coexistence des champs MH-4, MH-5 et MH-6 au sein d'un message MH permet à celui-ci, comme nous l'avons évoqué précédemment en liaison avec le traitement 100 décrit par la figure 5, de propager ledit message d'enrôlement au moyen de messages relayés MH' au sein de la grappe. Ainsi, les Membres réceptionnant un tel message MH ou MH' peuvent vérifier s'ils sont en capacité de relayer des messages de service notamment ou de recouvrer un statut de noeud libre. L'invention permet ainsi de réguler aisément la profondeur d'une grappe sous l'impulsion de son Head. Il est ainsi possible de maintenir, augmenter ou réduire ladite profondeur par la combinaison des données TTL, TTL-e et DST.

L'invention permet également à un Membre d'une grappe de pouvoir réguler sa fonction éventuelle de Membre relayeur selon ses propres capacités énergétiques ou de communication. Tout en respectant les consignes du Head, par la mise en oeuvre des traitements 100 et 110 selon la première ou la deuxième modalité, un Membre peut être restrictif au regard de sa fonction relai au profit d'autres noeuds Membres ou Affiliés appartenant à une route descendante. Pour cela, l'invention prévoit que l'étape 109 puisse, à l'instar de l'éventuelle étape 111 et de l'étape 112 pour produire respectivement une capacité CH à s'auto-désigner Head et une profondeur de grappe Dp, produire une capacité CR à relayer des messages de service ou autres au bénéfice de dispositifs tiers appartenant à une route descendante. Une telle capacité CR peut avantageusement être calculée telle que CR = R₁.h₁(p1) + R₂.h₂(p2) + ... Rᵢ.hᵢ(pᵢ) pour laquelle, i étant un entier supérieur ou égal à 1, R1, R2,..., Ri constituent des poids, éventuellement distincts, h₁(), h₂() ,..., hᵢ() sont des fonctions de calcul éventuellement distinctes, par exemple l'élaboration d'un ratio, et p₁, p₂, ..., pᵢ sont des paramètres fonctionnels du dispositif Membre. Selon la teneur de CR, et par comparaison avec un ou plusieurs seuils minima fonctionnels prédéterminés et par exemple enregistrés en mémoire de données 12, les étapes 106 ou 107 sont mises en oeuvre. Ainsi, un Membre relayeur, à réception d'un message MH ou MH' émanant du Head de la grappe à laquelle il appartient, peut ne pas automatiquement propager ledit message d'enrôlement eu égard à CR alors que les éléments décodés en 102 (TTL, voire TTL-e et DST) lui auraient enseigné de propager ledit message d'enrôlement. Que l'on privilégie la première modalité ou la deuxième modalité précédemment évoquées, l'invention garantit une continuité de service inégalée en affectant automatiquement des rôles pertinents aux différents noeuds d'un réseau de dispositifs électroniques communicant. La robustesse d'un tel réseau selon l'invention s'en trouve décuplée.

Pour acheminer des messages de services émanant d'un noeud Membre ou Affilié, le procédé P100 comporte en outre un traitement 120 déclenché, à titre d'exemples non limitatifs, à réception d'un message de service émis par un dispositif tiers ou en réaction à la prise de mesure environnementale par le dispositif. Au sein de l'enregistrement RH, enregistré en mémoire de données 12, le couple d'identifiants des dispositifs Membres de grappe et tête de grappe (Head) constitue l'information de route nécessaire au relai d'un message de service MS à destination dudit Head. En effet, un tel traitement 120 comporte une étape 123 pour émettre un message de service MS à destination du dispositif agissant en tant que Head pour un service S déterminé. Une telle étape 123 est mise en oeuvre à la suite d'une étape préalable pour, par exemple, collecter depuis un capteur 15 une mesure en lien avec la température régnant au sein d'un conteneur, contre lequel le dispositif 10 mettant en oeuvre le procédé de communication P100 est apposé. Bien évidemment, une telle étape 123 est également conditionnée à la présence (étape 122 en figure 5) d'un enregistrement RH comportant la valeur IDHc d'un identifiant d'un dispositif ou noeud agissant en tant que Head (situation symbolisée par le lien 122-y en figure 3). Selon que ledit enregistrement RH comporte une route ascendante Ru directe, c'est-à-dire que seule une valeur d'identifiant de Head n'est présente dans l'enregistrement RH, ou une route ascendante indirecte, c'est-à-dire que ledit enregistrement RH comporte en outre une valeur d'identifiant d'un Membre relayeur, le message MS est directement transmis audit Head ou audit Membre relayeur.

Comme évoqué précédemment, une telle émission 123 d'un message de service MS peut être aussi déclenchée par la réception 121 d'un message de service MS émanant d'un Membre d'une même grappe et adressé au dispositif 10, qui met en oeuvre ledit procédé d'adhésion P100 et agit en tant que Membre relayeur. Suite à la réception d'un tel message de service émanant d'un Membre d'une même grappe, l'étape 121 peut donc comporter une étape pour recevoir et décoder un tel message MS, voire pour enregistrer temporairement dans la mémoire de données 12 les données contenues dans ledit message de service MS décodé. Le relai dudit message MS peut se traduire ainsi par une réémission en temps différé.

Un procédé de communication P100 conforme à l'invention comporte en outre un traitement 130 pour exploiter un message MR de destruction de grappe tel qu'évoqué précédemment, émis depuis un Head et/ou pour interpréter un message de fin de relai MF émis depuis un Membre qui n'est plus en situation d'assurer sa fonction de relai, de par propre capacité CR ou par application stricte d'une requête de réduction de la profondeur de grappe émanant du Head ayant émis un message d'enrôlement MH selon l'invention. Un tel traitement 130 d'un procédé de communication P100 conforme à l'invention comporte une première étape 131 pour recevoir un message de destruction de grappe MR ou de fin de relai MF élaboré et émis par un dispositif électronique communicant tiers, par exemple un dispositif 10i, ayant eu préalablement qualité à agir en tant que Head ou Membre Relayeur.

Comme étudié précédemment en liaison avec les étapes 114 et 115, un message de destruction de grappe MR comporte l'identifiant IDR du dispositif ayant émis ledit message de destruction de grappe MR. Le traitement 130 comporte dès lors une étape 132 pour décoder ledit message de destruction de grappe MR et en déduire la valeur dudit identifiant IDR du dispositif émetteur du message de destruction de grappe. La réception d'un tel message MR par un dispositif agissant en tant que Membre de la grappe concernée par le message de destruction, signifie une consigne stricte d'abandon de la grappe, ledit Membre recouvrant un statut de noeud libre. Pour cela, le traitement 130 d'un procédé P100 selon l'invention comporte avantageusement une étape 133 pour mettre à jour l'enregistrement RH comportant la valeur courante IDHc de l'identifiant d'un dispositif agissant en tant que Head, pour effacer ladite valeur courante ou remplacer celle-ci par une valeur prédéterminée traduisant une absence d'identifiant de dispositif agissant en tant que Head. Bien évidemment, ladite mise à jour 133 de l'enregistrement RH n'est effectuée que si (situation symbolisée par le lien 134-y en liaison avec la figure 5) la valeur de l'identifiant IDR déduite du message de destruction de grappe MR est identique à la valeur courante IDHc inscrite dans ledit enregistrement RH. Le traitement 130 comporte ainsi une étape 134, préalable à l'étape 133, pour mettre en oeuvre ladite comparaison de valeurs d'identifiants IDR et IDHc.

Dans le cadre de l'exploitation d'un réseau multi-sauts, à l'instar d'un message d'enrôlement MH, un message de destruction de grappe MR peut être avantageusement relayé par un Membre devenant libre par la mise en oeuvre de l'étape 133, en déclenchant l'émission d'un tel message MR ainsi relayé à destination d'autres Membres éventuels de la grappe en cours de destruction.

Concernant un message de fin de relai MF, l'étape 131 consiste à déduire l'identifiant, que nous noterons IDF, dudit dispositif émetteur et détecter l'information caractérisant le message MF en tant que message de fin de relai. La réception d'un tel message MF par un dispositif agissant en tant que Membre d'une même grappe et appartement à une route descendante depuis le dispositif émetteur du message MF, traduit une consigne stricte d'abandon de la grappe, ledit Membre recouvrant un statut de noeud libre. L'étape 133 consiste alors à mettre à jour l'enregistrement RH, en mémoire de données 12, pour effacer notamment la valeur courante IDHc ou remplacer celle-ci par une valeur prédéterminée traduisant une absence d'identifiant de dispositif agissant en tant que Head. Bien évidemment, ladite mise à jour 133 de l'enregistrement RH n'est effectuée (étape 134) que si (situation symbolisée par le lien 134-y en liaison avec la figure 5) la valeur de l'identifiant IDF déduite du message de fin de relai MF est compris dans la route ascendante Ru inscrite dans ledit enregistrement RH.

Quelle que soit la configuration d'un procédé de communication P100 conforme à l'invention, un mode d'adaptation préférée d'un dispositif électronique communicant, tel que le dispositif 10 décrit en liaison avec la figure 2 mettant en oeuvre un tel procédé P100, consiste à enregistrer ou télécharger en mémoire de programmes 14, un programme d'ordinateur P, comportant une pluralité d'instructions de programme qui, lorsqu'elles sont exécutées ou interprétées par l'unité de traitement 11 dudit dispositif 10, provoquent la mise en oeuvre dudit procédé de communication P100.

L'invention a été décrite au travers d'un exemple d'application préférée en lien avec le suivi de conteneurs de biens, de marchandises solides, fluides ou liquides, lesdits conteneurs coopérant respectivement avec des dispositifs électroniques communicants, tels que les dispositifs 10 et 10i selon la figure 2, mettant en oeuvre un procédé de communication, tel que le procédé P100 illustré en figure 5, lesdits dispositifs comportant chacun un capteur 15 coopérant avec une unité de traitement 11 pour mesurer et collecter une grandeur en lien avec les environnements interne et/ou externe desdits conteneurs.

De tels dispositifs pourraient être exploités pour une toute autre application distincte de celle visant à émettre des données collectées selon une liaison longue distance. Ils pourraient également, en variante ou en complément, assurer un ou plusieurs autres services. Pour cela, comme nous l'avons évoqué précédemment, la mémoire de données 12 de chaque dispositif 10, 10i peut comporter, non pas un seul enregistrement RH dédié à un service déterminé S, mais une pluralité d'enregistrements RHn, formant par exemple une table, respectivement dédiés à des services particuliers Sn. Les messages d'enrôlement MH ou MH', de service MS, voire de destruction de grappe MR ou de fin de relai MF, comporteraient, selon cette variante, une information permettant d'identifier le service Sn déterminé et concerné par chacun desdits messages.

Par ailleurs, l'invention concerne ainsi tout système comportant une pluralité de dispositifs électroniques communicants conformes à l'invention. Plus particulièrement, l'invention concerne tout système de traçabilité de conteneurs sur une aire de stockage ou une plateforme de transport, ledit système comportant en outre une entité distante pour collecter et exploiter des messages MC émis depuis un ou plusieurs desdits dispositifs lorsqu'ils agissent en tant que Head. Un tel système présente des performances, en matière d'autonomie énergétique, de robustesse et d'adaptabilité aux conditions d'exploitation inégalées et sans comparaison possible par rapport à celles conférées par les solutions connues, telles, qu'à titre d'exemple, le procédé LEACH. En effet, grâce à l'invention, l'exploitation de Heads, depuis leurs élections jusqu'à la réalisation de la ou des actions concernées par un service déterminé, est optimale, prévenant toute communication superflue ou inefficace au sein du réseau ou à destination d'entités tierces.

## Revendications

1. Procédé de communication (P100) au sein d'un réseau (N1) comprenant une pluralité de dispositifs électroniques communicants (10, 10i, a2,...,a8, b1,...,b8,..., e1,...,e8), ledit procédé (P100) étant mis en oeuvre par une unité de traitement (11) d'un premier dispositif électronique communicant (10) parmi lesdits dispositifs électroniques communicants au sein du réseau (N1), ledit premier dispositif électronique communicant comportant outre ladite unité de traitement (11), une mémoire de données (12), des premiers moyens de communication (13) assurant une communication de proximité sans fil avec un dispositif électronique communicant tiers (10i) du réseau (N1) situé à portée de communication, ladite mémoire de données (12) et lesdits premiers moyens de communication (13) coopérant avec ladite unité de traitement (11), la mémoire de données (12) comportant la valeur d'un identifiant (ID, ID', IDH, IDR, IDF) dédié audit premier dispositif électronique communicant (10) et un enregistrement (RH) pour mémoriser (IDHc) la valeur courante d'un identifiant (IDH) d'un deuxième dispositif électronique communicant (d2) agissant en tant que tête d'une grappe (Cl1, Cl2, Cl3), ledit procédé (P100) comportant :
- une étape (101) pour recevoir, via les premiers moyens de communication (13), un message d'enrôlement (MH, MH') élaboré et émis par un dispositif électronique communicant (10i) au sein du réseau (N1), ledit message d'enrôlement encodant l'identifiant (MH-1, IDH) du deuxième dispositif électronique communicant (d2) agissant en tant que tête que grappe ;
- une étape (102) pour décoder ledit message d'enrôlement (MH, MH') et en déduire la valeur dudit identifiant (MH-1, IDH) du deuxième dispositif électronique communicant agissant en tant que tête de grappe (d2) et, le cas échéant, la valeur de l'identifiant (ID') d'un troisième dispositif électronique communicant (10i) ayant relayé ledit message d'enrôlement (MH, MH') ;
- une étape (103) pour mettre à jour l'enregistrement (RH) pour que ce dernier mémorise, en tant que valeur courante d'identifiant (IDHc) de dispositif agissant en tant que tête de grappe, ladite valeur de l'identifiant (IDH) du deuxième dispositif agissant en tant que tête de grappe déduite du message d'enrôlement (MH, MH') décodé et, le cas échant, que ledit enregistrement (RH) mémorise en outre, en tant que route ascendante (Ru) vers ledit deuxième dispositif électronique communicant agissant en tant que tête de grappe (d2), la valeur de l'identifiant (ID') du troisième dispositif électronique communicant (10i) ;
ledit procédé (P100) étant **caractérisé en ce que** :
- ledit message d'enrôlement (MH, MH') encode en outre une donnée TTL (MH-4) traduisant l'aptitude d'un dispositif électronique communicant réceptionnant ledit message d'enrôlement (MH, MH') à pouvoir relayer ce dernier ;
- l'étape pour décoder (102) ledit message d'enrôlement (MH, MH') en déduit en outre la valeur de ladite donnée TTL ;
- l'étape (103) pour mettre à jour l'enregistrement (RH) est adaptée pour que ledit enregistrement mémorise la valeur courante de ladite donnée TTL préalablement décrémentée (102) d'une unité ;
et **en ce que** ledit procédé (P100) comporte :
- une étape pour produire (106) un message d'enrôlement relayé (MH'), ledit message (MH') comportant :
o un premier champ (MH-1) encodant la valeur courante d'identifiant (IDHc) de dispositif (d2) agissant en tant que tête de grappe inscrite dans l'enregistrement (RH) ;
o un deuxième champ (MH-2) caractérisant une route ascendante (Ru) vers le deuxième dispositif électronique communicant agissant en tant que tête de grappe, et encodant l'identifiant (ID) du premier dispositif électronique communicant (10) ;
o un troisième champ (MH-4) encodant la valeur courante de la donnée TTL inscrite dans l'enregistrement (RH) ;
- une étape (106) pour déclencher l'émission par les premiers moyens de communication (13) dudit message relayé (MH') si (109y) une étape préalable (109), consistant à comparer la valeur courante de la donnée TTL inscrite dans l'enregistrement (RH) à une valeur plancher déterminée, atteste que ladite valeur courante de TTL est strictement supérieure à ladite donnée plancher.

2. Procédé de communication (P100) selon la revendication précédente, pour lequel :
- le message d'enrôlement (MH, MH') reçu comporte une donnée (CH) traduisant la capacité du deuxième dispositif électronique communicant agissant en tant que tête de grappe à pouvoir assurer un service donné (S) ;
- l'étape pour décoder (102) ledit message d'enrôlement (MH, MH') déduit en outre dudit message d'enrôlement ladite donnée (CH) traduisant ladite capacité ;
- l'étape pour mettre à jour (103) l'enregistrement (RH) consiste en outre à inscrire dans ledit enregistrement (RH) la valeur (CHc) de ladite donnée (CH) traduisant la capacité du dispositif (d2) agissant en tant que tête de grappe.

3. Procédé de communication (P100) selon la revendication précédente, pour lequel l'étape (103) pour mettre à jour l'enregistrement (RH) et y inscrire la valeur courante (IDHc) de l'identifiant de dispositif électronique communicant agissant en tant que tête de grappe n'est accomplie que si (104-y) la donnée (CH) traduisant ladite capacité est supérieure ou égale à un seuil minimal d'exigence déterminé.

4. Procédé de communication (P100) selon l'une quelconque des revendications précédentes, comportant :
- une étape (131) pour recevoir un message de fin de relai (MF) élaboré et émis par le troisième dispositif électronique communicant (10i), ledit message de fin de relai (MF) comportant l'identifiant (IDF, ID') dudit troisième dispositif électronique communicant (10i) ;
- une étape pour décoder (132) ledit message de fin de relai (MF) et pour en déduire la valeur dudit identifiant (IDF, ID') ;
- une étape pour mettre à jour (133) l'enregistrement (RH) comportant la valeur courante (IDHc) d'un identifiant d'un dispositif agissant en tant que tête de grappe, pour effacer ladite valeur courante (IDHc) ou remplacer celle-ci par une valeur prédéterminée traduisant une absence d'identifiant de dispositif agissant en tant que tête de grappe, ladite mise à jour (133) de l'enregistrement (RH) n'étant effectuée que si (134-y) la valeur de l'identifiant (10', IDF) déduit du message de fin de relai (MF) est comprise dans l'enregistrement (RH) en tant que route ascendante (Ru) vers ledit dispositif agissant en tant que tête de grappe (d2).

5. Procédé de communication (P100) selon l'une quelconque des revendications précédentes, pour lequel :
- l'étape (109) consistant à comparer la valeur courante de la donnée TTL inscrite dans l'enregistrement (RH) à une valeur plancher déterminée, consiste en outre à produire une capacité (CR) à relayer des messages au bénéfice de dispositifs électroniques communicants, lesdits dispositifs électroniques communicants appartenant à une route descendante depuis le premier dispositif électronique communicant (10), selon un paramètre fonctionnel dudit dispositif, et à comparer ladite capacité (CR) produite à un seuil minimum fonctionnel prédéterminé ;
- l'étape (106) pour déclencher l'émission par les premiers moyens de communication (13) dudit message relayé (MH') n'étant mise en oeuvre que si (109y) ladite capacité (CR) produite est strictement supérieure audit seuil minimum fonctionnel prédéterminé.

6. Procédé de communication (P100) selon l'une quelconque des revendications précédentes, pour lequel l'étape (103) pour mettre à jour l'enregistrement (RH) à la suite du décodage (102) d'un message d'enrôlement (MH, MH') consiste en outre à déclencher, concomitamment avec la mise à jour de l'enregistrement (RH), des moyens de mesure d'une durée, ledit procédé de communication (P100) comportant une étape pour comparer ladite durée à une période d'attente maximale prédéterminée et pour mettre à jour (107) ledit enregistrement (RH) et effacer ou remplacer la valeur courante (IDHc) d'identifiant de dispositif électronique communicant agissant en tant que tête de grappe par une valeur prédéterminée traduisant une absence d'identifiant de dispositif électronique communicant agissant en tant que tête de grappe.

7. Procédé de communication (P100) selon l'une quelconque des revendications précédentes, pour lequel :
- un message d'enrôlement (MH, MH') comporte un champ (MH-5) encodant une donnée TTL-e caractérisant la profondeur maximale de grappe souhaitée par le deuxième dispositif électronique communicant (d2) agissant en tant que tête de grappe et un champ (MH-6) encodant une donnée DST caractérisant la distance séparant le dispositif électronique communicant émetteur dudit message d'enrôlement (MH, MH') sur une route descendante depuis le dispositif électronique communicant agissant en tant que tête de grappe (d2) ;
- l'étape (102) pour décoder ledit message d'enrôlement (MH, MH') en déduire les valeurs desdites données TTL-e et DST ;
- l'étape (103) pour mettre à jour l'enregistrement (RH) est adaptée pour que ledit enregistrement mémorise la valeur de la donnée TTL-e et la valeur, préalablement incrémentée d'une unité, de la donnée DST ;
ledit procédé (P100) comportant en outre une étape pour comparer lesdites valeurs TTL-e et DST inscrites dans l'enregistrement (RH) et pour mettre à jour (107) ledit enregistrement (RH) et effacer ou remplacer la valeur courante (IDHc) d'identifiant de dispositif électronique communicant agissant en tant que tête de grappe par une valeur prédéterminée traduisant une absence d'identifiant de dispositif agissant en tant que tête de grappe.

8. Procédé de communication (P100) selon l'une quelconque des revendications précédentes, comportant :
- une étape pour déterminer la profondeur (Dp) maximale de la grappe dont le premier dispositif électronique communicant (10) souhaite être tête de grappe selon (112) un paramètre de fonctionnement dudit dispositif (10) ;
- une étape pour encoder un message d'enrôlement (MH) et déclencher l'émission (113) dudit message (MH) par les premiers moyens de communication (13), ledit message (MH) comportant un premier champ (MH-1) encodant l'identifiant (IDH) dudit premier dispositif électronique communicant et un deuxième champ (MH-4) encodant la donnée TTL dont la valeur est initialisée à celle de la profondeur maximale de grappe produite.

9. Procédé de communication (P100) selon la revendication 7, comportant :
- une étape pour déterminer la profondeur (Dp) maximale de la grappe dont le premier dispositif électronique communicant (10) souhaite être tête de grappe selon (112) un paramètre de fonctionnement dudit dispositif (10) ;
- une étape pour encoder un message d'enrôlement (MH) et déclencher l'émission (113) dudit message (MH) par les premiers moyens de communication (13), ledit message (MH) comportant des champs (MH-1, MH-4, MH-5, MH-6) encodant respectivement :
a. l'identifiant (IDH) dudit dispositif ;
b. la donnée TTL dont la valeur est inscrite dans l'enregistrement (RH) ;
c. la donnée TTL-e dont la valeur est initialisée à celle de la profondeur (Dp) maximale de la grappe déterminée ;
d. la donnée DST dont la valeur est initialisée à une valeur indiquant une distance nulle en nombre de sauts.

10. Procédé de communication (P100) selon les revendications 8 ou 9, comportant une étape pour évaluer (111) la capacité du premier dispositif électronique communicant (10) à assumer un service (S) déterminé, ladite étape (111) consistant à estimer (1111) un paramètre de fonctionnement dudit dispositif (10) et à produire (1112) une donnée (CH) traduisant la capacité dudit dispositif (10) à pouvoir assurer ledit service déterminé (S), et pour lequel l'étape pour encoder un message d'enrôlement (MH) consiste à prévoir, au sein dudit message d'enrôlement (MH), un champ (MH-3) encodant ladite donnée (CH) traduisant ladite capacité préalablement au déclenchement de l'émission (113) dudit message (MH) par les premiers moyens de communication (13).

11. Procédé de communication (P100) selon la revendication précédente, comportant une étape pour comparer (112) la donnée (CH) traduisant ladite capacité à un seuil fonctionnel minimal d'exigence et pour lequel l'étape (113) pour déclencher l'émission du message d'enrôlement n'est mise en oeuvre que si (112-y) la donnée traduisant ladite capacité est supérieure ou égale audit seuil fonctionnel minimal d'exigence.

12. Produit programme d'ordinateur (P) comportant des instructions de programme qui, lorsqu'elles sont exécutées ou interprétées par un ordinateur (10) provoquent la mise en oeuvre d'un procédé de communication (P100) selon l'une quelconque des revendications 1 à 11.

13. Dispositif électronique communicant (10) comportant une unité de traitement (11), une mémoire de données (12), une mémoire de programmes (14), des premiers moyens de communication (13) assurant une communication de proximité sans fil avec tout autre dispositif électronique communicant (10i) situé à portée de communication, lesdites mémoires (12, 14) et lesdits premiers moyens de communication (13) coopérant avec ladite unité de traitement (11), la mémoire de données (12) comportant la valeur d'un identifiant (ID) dédié au dispositif électronique communicant (10) et un enregistrement (RH) pour comporter la valeur courante d'un identifiant d'un dispositif agissant en tant que tête de grappe, ledit dispositif électronique communicant (10) étant **caractérisé en ce qu'**il comporte dans la mémoire de programmes (14), les instructions d'un produit programme d'ordinateur (P) selon la revendication précédente.

14. Système comportant une pluralité de dispositifs électroniques communicants (10, 10i) conformes à la revendication précédente.

15. Système selon la revendication précédente comportant une pluralité de conteneurs de biens, de marchandises solides, fluides ou liquides, lesdits containers coopérant respectivement avec les dispositifs électroniques communicants (10, 10i), ces derniers comportant chacun un capteur (15) coopérant avec l'unité de traitement (11) pour mesurer et collecter une grandeur en lien avec les environnements interne et/ou externe desdits conteneurs.

## Patentansprüche

1. Kommunikationsverfahren (P100) innerhalb eines Netzes (N1), das eine Vielzahl von elektronischen Kommunikationsvorrichtungen (10, 10i, a1, ... a8, b1, ... b8, ... e1, ... e8) umfasst, wobei das Verfahren (P100) durch eine Verarbeitungseinheit (11) einer ersten elektronischen Kommunikationsvorrichtung (10) aus den elektronischen Kommunikationsvorrichtungen innerhalb des Netzes (N1) umgesetzt wird, wobei die elektrische Kommunikationsvorrichtung neben der Verarbeitungseinheit (11) einen Datenspeicher (12), erste Kommunikationsmittel (13) umfasst, die eine drahtlose Umgebungskommunikation mit einer dritten elektronischen Kommunikationsvorrichtung (10i) des Netzes (N1) gewährleisten, die in Reichweite der Kommunikation angeordnet ist, wobei der Datenspeicher (12) und die ersten Kommunikationsmittel (13) mit der Verarbeitungseinheit (11) zusammenwirken, wobei der Datenspeicher (12) den Wert einer Kennung (ID, ID', IDH, IDR, IDF), der der ersten Kommunikationsvorrichtung (10) zugeordnet ist, und ein Register (RH) zum Speichern (IDHc) des aktuellen Werts einer Kennung (IDH) einer zweiten elektronischen Kommunikationsvorrichtung (d2) umfasst, die als Kopf eines Clusters (C11, C12, C13) wirkt, wobei das Verfahren (P100) Folgendes umfasst:
- einen Schritt (101) zum Empfangen über die ersten Kommunikationsmittel (13) einer Anmeldenachricht (MH, MH'), die durch eine elektronische Kommunikationsvorrichtung (10i) innerhalb des Netzes (N1) ausgearbeitet und versendet wurde, wobei die Anmeldenachricht die Kennung (MH-1, IDH) der zweiten elektronischen Kommunikationsvorrichtung (d2) codiert, die als Kopf des Clusters wirkt;
- einen Schritt (102) zum Decodieren der Anmeldenachricht (MH, MH') und zum Ableiten des Werts der Kennung (MH-1, IDH) der zweiten elektronischen Kommunikationsvorrichtung, die als Kopf des Clusters (d2) wirkt und gegebenenfalls des Werts der Kennung (ID') einer dritten elektronischen Kommunikationsvorrichtung (10i), die die Anmeldenachricht (MH, MH') weitergeleitet hat;
- einen Schritt (103) zum Aktualisieren des Registers (RH), damit dieses als aktuellen Wert der Kennung (IDHc) der Vorrichtung, die als Kopf des Clusters wirkt, den Wert der Kennung (IDH) der zweiten Vorrichtung speichert, die als Kopf des Clusters wirkt, der aus der decodierten Anmeldenachricht (MH, MH') abgeleitet ist, und damit das Register (RH) ferner gegebenenfalls als Aufwärtspfad (Ru) hin zur zweiten elektronischen Kommunikationsvorrichtung, die als Kopf des Clusters (d2) wirkt, den Wert der Kennung (ID') der dritten elektronischen Kommunikationsvorrichtung (10i) speichert;
wobei das Verfahren (P100) **dadurch gekennzeichnet ist, dass**:
- die Anmeldenachricht (MH, MH') ferner TTL-Daten (MH-4) codiert, die die Fähigkeit einer elektronischen Kommunikationsvorrichtung übersetzen, die Anmeldenachricht (MH, MH') zu empfangen, um diese weiterleiten zu können;
- der Schritt zum Decodieren (102) der Anmeldenachricht (MH, MH') daraus ferner den Wert der TTL-Daten ableitet;
- der Schritt (103) zum Aktualisieren des Registers (RH) geeignet ist, damit das Register den aktuellen Wert der TTL-Daten speichert, die vorher von einer Einheit dekrementiert (102) wurden;
und dadurch, dass das Verfahren (P100) Folgendes umfasst:
- einen Schritt zum Erzeugen (106) einer weitergegebenen Anmeldenachricht (MH'), wobei die Nachricht (MH') Folgendes umfasst:
• ein erstes Feld (MH-1), das den aktuellen Wert der Kennung (IDHc) der Vorrichtung (d2) codiert, die als Kopf des Clusters wirkt, das in dem Register (RH) eingetragen ist;
• ein zweites Feld (MH-2), das einen Aufwärtspfad (Ru) hin zur zweiten elektronischen Kommunikationsvorrichtung kennzeichnet, die als Kopf das Clusters wirkt, und das die Kennung (ID) der ersten Kommunikationsvorrichtung (10) codiert;
• ein drittes Feld (MH-4), das den aktuellen Wert der TTL-Daten codiert, der in dem Register (RH) eingetragen ist;
- einen Schritt (106) zum Auslösen der Versendung durch die ersten Kommunikationsmittel (13) der weitergegebenen Nachricht (MH'), wenn (109y) ein vorheriger Schritt (109), der aus dem Vergleichen des aktuellen Werts der TTL-Daten, der in dem Register (RH) eingetragen ist, mit einem bestimmten unteren Grenzwert besteht, bestätigt, dass der aktuelle TTL-Wert strikt höher ist als die unteren Grenzdaten.

2. Kommunikationsverfahren (P100) nach dem vorhergehenden Anspruch, wobei:
- die empfangene Anmeldenachricht (MH, MH') Daten (CH) umfasst, die die Kapazität der zweiten elektronischen Kommunikationsvorrichtung übersetzen, die als Kopf des Clusters wirkt, um einen gegebenen Dienst (S) gewährleisten zu können;
- der Schritt zum Decodieren (102) der Anmeldenachricht (MH, MH') ferner von der Anmeldenachricht die Daten (CH) ableitet, die die Kapazität übersetzen;
- der Schritt zum Aktualisieren (103) des Registers (RH) ferner aus Eintragen im Register (RH) des Werts der Daten (CH) besteht, die die Kapazität der Vorrichtung (d2) übersetzen, die als Kopf des Clusters wirkt.

3. Kommunikationsverfahren (P100) nach dem vorhergehenden Anspruch, bei dem der Schritt (103) des Aktualisierens des Registers (RH) und des dortigen Eintragens des aktuellen Werts (IDHc) der Kennung der elektronischen Kommunikationsvorrichtung, die als Kopf des Clusters wirkt, nur dann abgeschlossen ist, wenn (104-y) die Daten (CH), die die Kapazität übersetzen, größer als oder gleich einer vorbestimmten Mindestanforderungsschwelle sind.

4. Kommunikationsverfahren (P100) nach einem der vorhergehenden Ansprüche, das Folgendes umfasst:
- einen Schritt (131) zum Empfangen einer Nachricht vom Relaisende (MF), die von der dritten elektronischen Kommunikationsvorrichtung (10i) erstellt und versendet wird, wobei die Nachricht vom Relaisende (MF) die Kennung (IDF, ID') der dritten elektronischen Kommunikationsvorrichtung (10i) umfasst;
- einen Schritt zum Dekodieren (132) der Nachricht vom Relaisende (MF) und zum Ableiten des Werts der Kennung (IDF, ID') daraus;
- einen Schritt zum Aktualisieren (133) des Registers (RH), das den aktuellen Wert (IDHc) einer Kennung einer Vorrichtung umfasst, die als Kopf des Clusters wirkt, um den aktuellen Wert (IDHc) zu löschen oder ihn durch einen vorbestimmten Wert zu ersetzen, der ein Fehlen der Kennung der Vorrichtung übersetzt, die als Kopf des Clusters wirkt, wobei die Aktualisierung (133) des Registers (RH) nur bewirkt wird, wenn (134-y) der Wert der Kennung (10', IDF), der aus dem Wert der Nachricht am Relaisende (MF) abgeleitet ist, im Register (RH) als Aufwärtspfad (Ru) hin zur Vorrichtung enthalten ist, die als Kopf des Clusters (d2) wirkt.

5. Kommunikationsverfahren (P100) nach einem der vorhergehenden Ansprüche, wobei:
- der Schritt (109), der darin besteht, den aktuellen Wert der TTL-Daten, die in das Register (RH) eingetragen sind, mit einem vorbestimmten unteren Grenzwert zu vergleichen, ferner darin besteht, eine Kapazität (CR) zu erzeugen, um die Nachrichten zugunsten der elektronischen Kommunikationsvorrichtungen weiterzuleiten, wobei die elektronischen Kommunikationsvorrichtungen zu einem Abwärtspfad von der ersten Kommunikationsvorrichtung (10) gemäß einem Funktionsparameter der Vorrichtung gehören, und die erzeugte Kapazität (CR) mit einem vorbestimmten unterem funktionalen Grenzwert zu vergleichen;
- der Schritt (106) zum Auslösen der Versendung durch die ersten Kommunikationsmittel (13) der weitergeleiteten Nachricht (MH') nur umgesetzt wird, wenn (109y) die erzeugte Kapazität (CR) strikt höher ist als der vorbestimmte untere funktionale Grenzwert.

6. Kommunikationsverfahren (P100) nach einem der vorhergehenden Ansprüche, wobei der Schritt (103) zum Aktualisieren des Registers (RH) infolge der Decodierung (102) einer Anmeldenachricht (MH, MH') ferner darin besteht, gleichzeitig mit der Aktualisierung des Registers (RH) die Messinstrumente einer Dauer auszulösen, wobei das Kommunikationsverfahren (P100) einen Schritt zum Vergleichen der Dauer mit einer vorbestimmten maximalen Wartezeit und zum Aktualisieren (107) des Registers (RH) und zum Löschen oder Ersetzen des aktuellen Werts (IDHc) der Kennung der elektronischen Kommunikationsvorrichtung, die als Kopf des Clusters wirkt, durch einen vorbestimmten Wert umfasst, der ein Fehlen der Kennung der elektronischen Kommunikationsvorrichtung übersetzt, die als Kopf des Clusters wirkt.

7. Kommunikationsverfahren (P100) nach einem der vorhergehenden Ansprüche, wobei:
- eine Anmeldenachricht (MH, MH') ein Feld (MH-5) umfasst, das TTL-e-Daten codiert, die die maximale Tiefe des gewünschten Clusters durch die zweite elektronische Kommunikationsvorrichtung (d2) kennzeichnen, die als Kopf des Clusters wirkt, und ein Feld (MH-6) umfasst, das DST-Daten codiert, die den Abstand, der die elektronische Kommunikationsvorrichtung trennt, die Absender der Anmeldenachricht (MH, MH') ist, auf einem Abwärtspfad von der elektronischen Kommunikationsvorrichtung weg kennzeichnen, die als Kopf des Clusters (d2) wirkt;
- der Schritt (102) zum Decodieren der Anmeldenachricht (MH, MH') unter Ableiten der Werte der TTL-e- und DST-Daten;
- der Schritt (103) zum Aktualisieren des Registers (RH) geeignet ist, damit das Register den Wert der TTL-e-Daten und den Wert der DST-Daten speichert, der zuvor von einer Einheit inkrementiert wurde;
wobei das Verfahren (P100) ferner einen Schritt zum Vergleichen der TTL-e- und DST-Werte, die in das Register (RH) eingetragen sind, und zum Aktualisieren (107) des Registers (RH) und zum Löschen oder Ersetzen des aktuellen Werts (IDHc) der Kennung der elektronischen Kommunikationsvorrichtung umfasst, die als Kopf des Clusters durch einen vorbestimmten Wert wirkt, der ein Fehlen einer Kennung der Vorrichtung übersetzt, die als Kopf des Clusters wirkt.

8. Kommunikationsverfahren (P100) nach einem der vorhergehenden Ansprüche, das Folgendes umfasst:
- einen Schritt zum Bestimmen der maximalen Tiefe (Dp) des Clusters, von dem die erste elektronische Kommunikationsvorrichtung (10) der Kopf das Clusters gemäß (112) einem Funktionsparameter der Vorrichtung (10) zu sein plant;
- einen Schritt zum Codieren einer Anmeldenachricht (MH) und Auslösen der Versendung (113) der Nachricht (MH) durch die ersten Kommunikationsmittel (13), wobei die Nachricht (MH) ein erstes Feld (MH-1), das die Kennung (IDH) der ersten elektronischen Kommunikationsvorrichtung codiert, und ein zweites Feld (MH-4) umfasst, das die TTL-Daten codiert, deren Wert von dem der maximalen Tiefe des erzeugten Clusters initialisiert wird.

9. Kommunikationsverfahren (P100) nach Anspruch 7, das Folgendes umfasst:
- einen Schritt zum Bestimmen der maximalen Tiefe (Dp) des Clusters, von dem die erste elektronische Kommunikationsvorrichtung (10) Kopf des Clusters gemäß (112) einem Funktionsparameter der Vorrichtung (10) zu sein plant;
- einen Schritt zum Codieren einer Anmeldenachricht (MH) und zum Auslösen der Versendung (113) der Nachricht (MH) durch die ersten Kommunikationsmittel (13), wobei die Nachricht (MH) Felder (MH-1, MH-4, MH-5, MH-6) umfasst, die jeweils Folgendes codieren:
a. die Kennung (IDH) der Vorrichtung;
b. die TTL-Daten, deren Wert im Register (RH) eingetragen ist;
c. die TTL-e-Daten, deren Wert von dem der maximalen Tiefe (Dp) des bestimmten Clusters initialisiert wird;
d. die DST-Daten, deren Wert von einem Wert initialisiert wird, der einen Nullabstand in der Anzahl der Sprünge angibt.

10. Kommunikationsverfahren (P100) nach einem der Ansprüche 8 oder 9, das einen Schritt zum Evaluieren (111) der Kapazität der ersten elektronischen Kommunikationsvorrichtung (10) umfasst, um einen bestimmten Dienst (S) zu starten, wobei der Schritt (111) aus Schätzen (1111) eines Funktionsparameters der Vorrichtung (10) und Erzeugen (1112) von Daten (CH) besteht, die die Kapazität der Vorrichtung (10) übersetzen, um den bestimmten Dienst (S) gewährleisten zu können, und wobei der Schritt des Codierens einer Anmeldenachricht (MH) aus Vorsehen eines Feldes (MH-3) innerhalb der Anmeldenachricht (MH) besteht, das die Daten (CH) codiert, die die Kapazität vor dem Auslösen der Versendung (113) der Nachricht (MH) durch die ersten Kommunikationsmittel (13) übersetzen.

11. Kommunikationsverfahren (P100) nach dem vorhergehenden Anspruch, das einen Schritt zum Vergleichen (112) der Daten (CH) umfasst, die die Kapazität in eine funktionale Mindestanforderungsschwelle übersetzen, und wobei der Schritt (113) zum Auslösen der Versendung der Anmeldenachricht nur umgesetzt wird, wenn (112-y) die Daten, die die Kapazität übersetzen, größer oder gleich der funktionalen Mindestanforderungsschwelle sind.

12. Computerprogrammprodukt (P), das Programmbefehle umfasst, die, wenn sie durch einen Computer (10) ausgeführt oder interpretiert werden, die Umsetzung eines Kommunikationsverfahrens (P100) nach einem der Ansprüche 1 bis 11 bewirken.

13. Elektronische Kommunikationsvorrichtung (10), die eine Verarbeitungseinheit (11), einen Datenspeicher (12), einen Programmspeicher (14), erste Kommunikationsmittel (13) umfasst, die eine drahtlose Umgebungskommunikation mit jeder anderen elektronischen Kommunikationsvorrichtung (10i) gewährleisten, die in Reichweite der Kommunikation liegt, wobei die Speicher (12, 14) und die ersten Kommunikationsmittel (13) mit der Verarbeitungseinheit (11) zusammenwirken, wobei der Datenspeicher (12) den Wert einer Kennung (ID), der der elektronischen Kommunikationsvorrichtung (10) zugeordnet ist, und ein Register (RH) zum Fassen des aktuellen Werts einer Kennung einer Vorrichtung umfasst, die als Kopf des Clusters wirkt, wobei die elektronische Kommunikationsvorrichtung (10) **dadurch gekennzeichnet ist, dass** sie in dem Programmspeicher (14) die Befehle eines Computerprogrammprodukts (P) nach dem vorhergehenden Anspruch umfasst.

14. System, das eine Vielzahl von elektronischen Kommunikationsvorrichtungen (10, 10i) umfasst, die dem vorhergehenden Anspruch genügen.

15. System nach dem vorstehenden Anspruch, das eine Vielzahl von Stückgutcontainern, festen oder flüssigen Waren umfasst, wobei die Container jeweils mit den elektronischen Kommunikationsvorrichtungen (10, 10i) zusammenwirken, wobei diese jeweils einen Sensor (15) umfassen, der mit der Verarbeitungseinheit (11) zusammenwirkt, um eine Größe in Zusammenhang mit der inneren und/oder externen Umgebung der Container zu messen und zu erfassen.

## Claims

1. A communication method (P100) within a network (N1) comprising a plurality of communicating electronic devices (10, 10i, a1,...,a8, b1,...,b8, e1,...,e8), said method (P100) being implemented by a processing unit (11) of a first communicating electronic device (10) from among said communicating electronic devices within the network (N1), said first communicating electronic device further including said processing unit (11), a data memory (12), first communication means (13) providing wireless nearby communication with a third-party communicating electronic device (10i) of the network (N1) situated within communication range, said data memory (12) and said first communication means (13) cooperating with said processing unit (11), the data memory (12) including the value of an identifier (ID, ID', IDH, IDR, IDF) dedicated to said first communicating electronic device (10) and a record (RH) to store (IDHc) the current value of an identifier (IDH) of a second communicating electronic device (d2) acting as head of a cluster (C11, C12, C13), said method (P100) including:
- a step (101) for receiving, via the first communication means (13), an enrollment message (MH, MH') delivered and transmitted by a communicating electronic device (10i) within the network (N1), said enrollment message encoding the identifier (MH-1, IDH) of the second communicating electronic device (d2) acting as cluster head;
- a step (102) for decoding said enrollment message (MH, MH') and deducing the value of said identifier (MH-1, IDH) of the second communicating electronic device acting as cluster head (d2) therefrom and, if applicable, the value of the identifier (ID') of a third communicating electronic device (10i) having relayed said enrollment message (MH, MH');
- a step (103) for updating the record (RH) so that the latter stores, as current identifier value (IDHc) of the device acting as cluster head, said value of the identifier (IDH) of the second device acting as cluster head deduced from the decoded enrollment message (MH, MH') and, if applicable, said record (RH) also saves, as uplink route (Ru) toward said second communicating electronic device acting as cluster head (d2), the value of the identifier (ID') of the third communicating electronic device (10i);
said method (P100) being **characterized in that**:
- said enrollment message (MH, MH') further includes a datum TTL (MH-4) reflecting the ability of a communicating electronic device receiving said enrollment message (MH, MH') to relay the latter;
- the step for decoding (102) said enrollment message (MH, MH') further deduces the value of said datum TTL therefrom;
- the step (103) for updating the record (RH) is adapted so that said record stores the current
value of said datum TTL previously decremented (102) by one unit;
and **in that** said method (P100) includes:
- a step for producing (106) a relayed enrollment message (MH'), said message (MH') comprising:
a. a first field (MH-1) encoding the current identifier value (IDHc) of the device (d2) acting as cluster head recorded in the record (RH);
b. a second field (MH-2) characterizing an uplink route (Ru) toward the second communicating electronic device acting as cluster head, and encoding the identifier (ID) of the first communicating electronic device (10);
c. a third field (MH-4) encoding the current value of the datum TTL recorded in the record (RH);
- a step (106) for triggering the transmission by the first communication means (13) of said relayed message (MH') if (109y) a prior step (109), consisting of comparing the current value of the datum TTL recorded in the record (RH) to a determined floor value, attests that said current value of TTL is strictly greater than said floor datum.

2. The communication method (P100) according to the preceding claim, wherein:
- the received enrollment message (MH, MH') includes a datum (CH) reflecting the capacity of the second communicating electronic device acting as cluster head to provide a given service (S);
- the step for decoding (102) said enrollment message (MH, MH') may further deduce, from said enrollment message, said datum (CH) reflecting said capacity;
- the step for updating (103) the record (RH) may further consist of recording, in said record (RH), the value (CHc) of said datum (CH) reflecting the capacity of the device (d2) acting as cluster head.

3. The communication method (P100) according to the preceding claim, wherein the step (103) for updating the record (RH) and recording the current identifier value (IDHc) of the communicating electronic device acting as cluster head therein may advantageously only be performed if (104-y) the datum (CH) reflecting said capacity is greater than or equal to a determined minimum requirement threshold.

4. The communication method (P100) according to any one of the preceding claims, including:
- a step (131) for receiving an end of relay message (MF) developed and transmitted by the third communicating electronic device (10i), said end of relay message (MF) including the identifier (IDF, ID') of said third communicating electronic device (10i);
- a step (132) for decoding said end of relay message (MF) and for deducing the value of said identifier (IDF, ID') therefrom;
- a step for updating (133) the record (RH) encoding the current value (IDHc) of an identifier of the device acting as cluster head, to erase said current value (IDHc) or replace it with a predetermined value reflecting an absence of identifier of the device acting as cluster head, said update (133) of the record (RH) only being done if (134-y) the value of the identifier (10', IDF) deduced from the end of relay message (MF) is comprised in the record (RH) as uplink route (Ru) toward said device acting as cluster head (d2).

5. The communication method (P100) according to any one of the preceding claims, wherein:
- the step (109) consisting of comparing the current value of the datum TTL recorded in the record (RH) to a determined floor value further consists of producing a capacity (CR) to relay messages in favor of communicating electronic devices, said communicating electronic devices belonging to a downlink route from the first communicating electronic device (10), according to a functional parameter of said device, and comparing said produced capacity (CR) to a predetermined minimum functional threshold;
- the step (106) for triggering the transmission by the first communication means (13) of said relayed message (MH') only being implemented if (109y) said produced capacity (CR) is strictly greater than said predetermined functional minimum threshold.

6. The communication method (P100) according to any one of the preceding claims, wherein the step (103) for updating the record (RH) following the decoding (102) of an enrollment message (MH, MH') further consists of triggering, concomitantly with the update of the record (RH), means for measuring a duration, said communication method (P100) including a step for comparing said duration to a predetermined maximum waiting period and updating (107) said record (RH) and erasing or replacing the current identifier value (IDHc) of the communicating electronic device acting as cluster head with a predetermined value reflecting absence of identifier of the communicating electronic device acting as cluster head.

7. The communication method (P100) according to any one of the preceding claims, including:
- an enrollment message (MH, MH') includes a field (MH-5) encoding a datum TTL-e characterizing the maximum cluster depth desired by the second communicating electronic device (d2) acting as cluster head and a field (MH-6) encoding a datum DST characterizing the distance separating the communicating electronic device sending said enrollment message (MH, MH') on a downlink route from the communicating electronic device acting as cluster head (d2);
- the step (102) for decoding said enrollment message (MH, MH') may deduce the values of said data TTL-e and DST therefrom;
- the step (103) for updating the record (RH) is also adapted so that said record (RH) stores the value of the datum TTL-e and the value, previously incremented by one unit, of the datum DST;
said communication method (P100) further including a step for comparing said values TTL-e and DST recorded in the record (RH) and for updating (107) said record (RH) and erasing or replacing the current identifier value (IDHc) of the communicating electronic device acting as cluster head with a predetermined value reflecting absence of device identifier acting as cluster head.

8. The communication method (P100) according to any one of the preceding claims, including:
- a step for determining the maximum depth (Dp) of the cluster for which the first communicating electronic device (10) wishes to be cluster head according to (112) an operating parameter of said device (10);
- a step for encoding an enrollment message (MH) and triggering the sending (113) of said message (MH) by the first communication means (13), said message (MH) including a first field (MH-1) encoding the identifier (IDH) of said first communicating electronic device and a second field (MH-4) encoding the datum TTL whereof the value is initialized to that of the produced maximum cluster depth.

9. The communication method (P100) according to claim 7, including:
- a step for determining the maximum depth (Dp) of the cluster of which the first communicating electronic device (10) wishes to be cluster head according to (112) an operating parameter of said device (10);
- a step for encoding an enrollment message (MH) and triggering the transmission (113) of said message (MH) by the first communication means (13), said message (MH) including fields (MH-1, MH-4, MH-5, MH-6) respectively encoding:
a. the identifier (IDH) of said device;
b. the datum TTL whereof the value is recorded in the record (RH);
c. the datum TTL-e whereof the value is initialized at that of the maximum depth (Dp) of the determined cluster;
d. the datum DST whereof the value is initialized at a value indicating a zero distance in number of hops.

10. The communication method (P100) according claims 8 or 9, including a step for evaluating (111) the capacity of the first communicating electronic device (10) to perform a determined service (S), said step (111) consisting of estimating (1111) an operating parameter of said device (10) and producing (1112) a datum (CH) reflecting the capacity of said device (10) to perform said determined service (S), and for which the step for encoding an enrollment message (MH) consists of providing, within said enrollment message (MH), a field (MH-3) encoding said datum (CH) reflecting said capacity prior to triggering the transmission (113) of said message (MH) by the first communication means (13).

11. The communication method (P100) according to the preceding claim, including a step for comparing (112) the datum (CH) reflecting said capacity to a minimum functional requirement threshold and for which the step (113) for triggering the transmission of the enrollment message is only implemented if (112-y) the datum reflecting said capacity is greater than or equal to said minimum functional requirement threshold.

12. A computer program product (P) including program instructions which, when they are executed or interpreted by a computer (10), cause the implementation of a communication method (P100) according to any one of claims 1 to 11.

13. A communicating electronic device (10) including a processing unit (11), a data memory (12), a program memory (14), first communication means (13) providing wireless nearby communication with any other communicating electronic device (10i) situated within communication range, said memories (12, 14) and said first communication means (13) cooperating with said processing unit (11), the data memory (12) including the value of an identifier (ID) dedicated to the communicating electronic device (10) and a record (RH) to include the current value of an identifier of a device acting as cluster head, said communicating electronic device (10) being **characterized in that** it includes, in the program memory (14), the instructions for a computer program product (P) according to the preceding claim.

14. A system including a plurality of communicating electronic devices (10, 10i) according to the preceding claim.

15. The system according to the preceding claim, including a plurality of containers of goods, solid, fluid or liquid merchandise, said containers respectively cooperating with the communicating electronic devices (10, 10i), the latter each including a sensor (15) cooperating with the processing unit (11) to measure and collect a property related to the internal and/or external environments of said containers.
